# EUROPEAN PATENT SPECIFICATION

(11) **EP 4 571 542 B1**
(45) Date of publication and mention of the grant of the patent: **08.07.2026**
(21) Application number: 24205467.4
(22) Date of filing: 09.10.2024
(51) Int. Cl.: G06F 21/32

(54) **INFORMATION PROCESSING APPARATUS AND CONTROL METHOD**
INFORMATIONSVERARBEITUNGSVORRICHTUNG UND STEUERUNGSVERFAHREN
APPAREIL DE TRAITEMENT D'INFORMATIONS ET PROCÉDÉ DE COMMANDE

(30) Priority: 15.12.2023 JP 2023211983
(43) Date of publication of application: 18.06.2025
(73) Proprietor: Lenovo (Singapore) Pte. Ltd., Singapore 556741 (SG)
(72) Inventor: NISHIO, Masashi, Yokohama-shi, 220-0012 (JP); SHIMIZU, Eri, Yokohama-shi, 220-0012 (JP)
(74) Representative: Openshaw & Co.

(56) References cited:
- US-A1- 2013 216 108
- US-A1- 2015 125 046
- US-A1- 2016 110 589
- US-A1- 2023 289 484

## Description

### BACKGROUND OF THE INVENTION

### Field of the Invention

The present invention relates to an information processing apparatus and a control method.

### Description of the Related Art

There is an information processing apparatus which makes a transition to a usable state when a person approaches or to a standby state in which functions except some of the functions are stopped when the person moves away. For example, in Japanese Unexamined Patent Application Publication No. 2016-148895, it is detected whether a person is approaching or has moved away using an infrared sensor.

In recent years, with the development of computer vision and the like, detection accuracy when detecting a face from an image has been getting higher. Therefore, face detection is starting to be used instead of person detection by the infrared sensor. Further, when booting the information processing apparatus, user authentication (for example, login authentication) is performed to authenticate whether or not a person is an authorized user. As this authentication method, face authentication is starting to be used. For example, when a person approaches, the information processing apparatus is booted by detecting a face of the person, and when the person is an authorized user as a result of performing login authentication such as face authentication after that, login to the system is allowed and the information processing apparatus makes a transition to the usable state. Patent document US2023/289484 discloses relevant prior art.

### SUMMARY OF THE INVENTION

In the method of booting the information processing apparatus by face detection as described above, there is a problem that the information processing apparatus is booted up unnecessarily even when any person other than the authorized user approaches. In order to solve this problem, it is considered a method of performing face detection, for example, when authentication is successful in OS login authentication, registering a detected face image as a face image of an authorized user, and performing face authentication in addition to face detection upon bootup. However, it is desirable to keep face image registration information inside a processor for face detection from the perspective of security, and in such a case, the OS side cannot determine whether the detected face image is already registered or not. Therefore, when a face image is registered every time authentication is successful in the OS login authentication, there is a concern that face images of the authorized user (face images of similar faces of the same person) are registered in large numbers, and registration slots (memory capacity) are filled up immediately.

The present invention has been made in view of the above circumstances, and it is an object thereof to provide an information processing apparatus and a control method of properly registering a face image of an authorized user used for face authentication.

The present invention has been made to solve the above problem, and an information processing apparatus according to the first aspect of the present invention includes: a memory which temporarily stores a program of a system; a first processor which executes face detection processing to detect an area of a face image with a face captured therein from a captured image captured by an imaging unit, and face authentication processing to authenticate the face based on information on the detected face image and information on a face image of an authorized user; and a second processor which executes the program of the system to boot the system from a standby state based on the fact that the area of the face image is detected by the face detection processing and face authentication by the face authentication processing is successful, wherein when booting the system, the second processor controls whether or not to cause the first processor to execute user registration processing to register information on the face image detected by the face detection processing after booting the system as information on the face image of the authorized user depending on whether or not a booting factor is input to an HID (Human Interface Device).

The above information processing apparatus may be such that, when the system is booted due to the factor that there is input to the HID, the second processor causes the first processor to execute the user registration processing, while when the booting factor is not input to the HID, the second processor does not cause the first processor to execute the user registration processing.

The above information processing apparatus may also be such that the second processor determines that the factor of booting the system is input to the HID when a difference between the timing when input to the HID is detected and the timing when display of a display unit is turned on due to the fact that the system is booted is within a predetermined time.

Further, an information processing apparatus according to the second aspect of the present invention includes: a memory which temporarily stores a program of a system; a first processor which executes face detection processing to detect an area of a face image with a face captured therein from a captured image captured by an imaging unit, and face authentication processing to authenticate the face based on information on the detected face and information on a face image of an authorized user; and a second processor which executes the program of the system to boot the system from a standby state based on the fact that the area of the face image is detected by the face detection processing and face authentication by the face authentication processing is successful, wherein when booting the system, the second processor determines whether or not a difference between the timing when input to an HID (Human Interface Device) is detected and the timing when display of a display unit is turned on due to the fact that the system is booted is within a predetermined time, and when the determination result is true, the second processor causes the first processor to execute user registration processing to register information on the face image detected by the face detection processing after booting the system as information on the face image of the authorized user, while when the determination result is false, the second processor does not cause the first processor to execute the user registration processing.

Further, an information processing apparatus according to the third aspect of the present invention includes: a memory which temporarily stores a program of a system; a first processor which executes face detection processing to detect an area of a face image with a face captured therein from a captured image captured by an imaging unit, and face authentication processing to authenticate the face based on information on the detected face image and information on a face image of an authorized user; and a second processor which executes the program of the system to boot the system from a standby state, wherein when booting the system, the second processor controls whether or not to cause the first processor to execute user registration processing to register information on the face image detected by the face detection processing after booting the system as information on the face image of the authorized user depending on whether or not a booting factor is the fact that the area of the face image is detected by the face detection processing and face authentication by the face authentication processing is successful.

The above information processing apparatus may be such that, when the system is booted due to a factor other than the success of the face authentication by the face authentication processing, the second processor causes the first processor to execute the user registration processing, while when the system is booted based on the success of the authentication result of the face authentication processing, the second processor does not cause the first processor to execute the user registration processing.

The above information processing apparatus may also be such that, after booting the system, the second processor executes system authentication processing to authenticate whether or not the face image is the face image of the authorized user by processing of the system, and as the user registration processing, the first processor registers information on the face image detected by the face detection processing as information on the face image of the authorized user within a predetermined time after authentication by the system authentication processing is successful.

The above information processing apparatus may further be such that, as the user registration processing, the first processor registers, as the information on the face image of the authorized user, information on a face image when a face orientation becomes a specific orientation among face images detected by the face detection processing within a predetermined period of time after authentication by the system authentication processing is successful.

Further, the above information processing apparatus may be such that, when the information on the face image of the authorized user is in an unregistered state, the second processor causes the first processor to execute the user registration processing regardless of the factor of booting the system.

Further, a control method according to the fourth aspect of the present invention is a control method for an information processing apparatus including a memory which temporarily stores a program of a system, first processor, and a second processor, the control method including: a step of causing the first processor to perform face detection processing to detect an area of a face image with a face captured therein from a captured image captured by an imaging unit; a step of causing the first processor to perform face authentication processing to authenticate the face based on information on the detected face image and information on a face image of an authorized user; a step of causing the second processor to execute the program of the system to boot the system from a standby state based on the fact that the area of the face image is detected by the face detection processing and face authentication by the face authentication processing is successful; and a step in which when booting the system, the second processor controls whether or not to cause the first processor to execute user registration processing to register information on the face image detected by the face detection processing after booting the system as information on the face image of the authorized user depending on whether or not a booting factor is input to an HID (Human Interface Device).

Further, a control method according to the fifth aspect of the present invention is a control method for an information processing apparatus including a memory which temporarily stores a program of a system, a first processor, and a second processor, the control method including: a step of causing the first processor to perform face detection processing to detect an area of a face image with a face captured therein from a captured image captured by an imaging unit; a step of causing the first processor to perform face authentication processing to authenticate the face based on information on the detected face image and information on a face image of an authorized user; a step of causing the second processor to execute the program of the system to boot the system from a standby state based on the fact that the area of the face image is detected by the face detection processing and face authentication by the face authentication processing is successful; a step in which, when booting the system, the second processor determines whether or not a difference between the timing when input to an HID (Human Interface Device) is detected and the timing when display of a display unit is turned on due to the fact that the system is booted is within a predetermined time; and a step in which, when the determination result is true, the second processor causes the first processor to execute user registration processing to register information on the face image detected by the face detection processing after booting the system as information on the face image of the authorized user, wherein when the determination result is false, the second processor does not cause the first processor to execute the user registration processing.

Further, a control method according to the sixth aspect of the present invention is a control method for an information processing apparatus including a memory which temporarily stores a program of a system, a first processor, and a second processor, the control method including: a step of causing the first processor to perform face detection processing to detect an area of a face image with a face captured therein from a captured image captured by an imaging unit; a step of causing the first processor to perform face authentication processing to authenticate the face based on information on the detected face image and information on a face image of an authorized user; a step of causing the second processor to execute the program of the system to boot the system from a standby state; and a step in which when booting the system, the second processor controls whether or not to cause the first processor to execute user registration processing to register information on the face image detected by the face detection processing after booting the system as information on the face image of the authorized user depending on whether or not a booting factor is the fact that the area of the face image is detected by the face detection processing and face authentication by the face authentication processing is successful.

The above-described aspects of the present invention can properly register a face image of an authorized user used for face authentication.

### BRIEF DESCRIPTION OF THE DRAWINGS

FIG. 1 is a diagram for describing an overview of HPD processing of an information processing apparatus according to an embodiment.
FIG. 2 is a diagram illustrating an example of a person detection range of the information processing apparatus according to the embodiment.
FIG. 3 is a diagram illustrating an overview of HPD processing of the information processing apparatus using an HPD user ID according to the embodiment.
FIG. 4 is a perspective view illustrating an appearance configuration example of the information processing apparatus according to the embodiment.
FIG. 5 is a diagram illustrating an example of the hardware configuration of the information processing apparatus according to the embodiment.
FIG. 6 is a diagram illustrating an example of the functional configuration of the information processing apparatus according to the embodiment.
FIG. 7 is a flowchart illustrating an example of HPD processing in a standby state according to the embodiment.
FIG. 8 is a flowchart illustrating an example of login authentication processing by face authentication according to the embodiment.
FIG. 9 is a flowchart illustrating an example of user registration control processing according to the embodiment.
FIG. 10 is a flowchart illustrating an example of user registration processing according to the embodiment.

### DETAILED DESCRIPTION OF THE INVENTION

An embodiment of the present invention will be described below with reference to the accompanying drawings.

First, the overview of an information processing apparatus according to the present embodiment will be described. An information processing apparatus 1 according to the present embodiment is, for example, a laptop (clamshell) PC (Personal Computer). Note that the information processing apparatus 1 may also be any other type of information processing apparatus such as a desktop PC, a tablet PC, or a smartphone.

The information processing apparatus 1 can make a transition, as the operating state of the system, at least between a normal operating state (power-on state) and a standby state. The normal operating state is an operating state capable of executing processing without being particularly limited, which corresponds, for example, to S0 state defined in the ACPI (Advanced Configuration and Power Interface) specification. The standby state is a state in which part of system processing is limited. For example, the standby state may be the standby state or a sleep state, Modern Standby in Windows (registered trademark), or a state corresponding to S3 state (sleep state) defined in the ACPI specification. For example, the standby state is an operating state lower in power consumption than the normal operating state.

In the following, a transition of the system operating state from the standby state to the normal operating state may also be called "boot." Since the standby state is typically lower in the activation level of the operation than the normal operating state, the boot of the system of the information processing apparatus 1 leads to the activation of the operation of the system in the information processing apparatus 1.

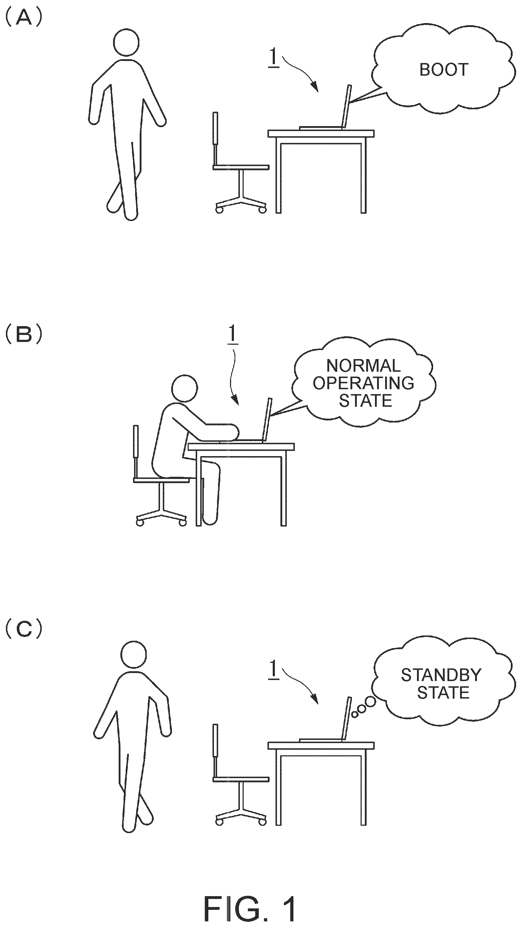

FIG. 1 is a diagram for describing an overview of HPD processing of the information processing apparatus 1 according to the present embodiment. The information processing apparatus 1 detects a person (that is, a user) present in the neighborhood of the information processing apparatus 1. This processing to detect the presence of a person is called HPD (Human Presence Detection) processing. The information processing apparatus 1 detects the presence or absence of a person by the HPD processing to control the operating state of the system of the information processing apparatus 1 based on the detection result. For example, as illustrated in FIG. 1(A), when detecting a change from a state where no person is present in front of the information processing apparatus 1 (Absence) to a state where a person is present (Presence), that is, when detecting that a person has approached the information processing apparatus 1 (Approach), the information processing apparatus 1 determines that the user has approached, and automatically boots the system to make a transition to the normal operating state. Further, in a state where a person is present in front of the information processing apparatus 1 (Presence) as illustrated in FIG. 1(B), the information processing apparatus 1 determines that the user is present, and continues the normal operating state. Then, as illustrated in FIG. 1(C), when detecting a change from the state where the person is present in front of the information processing apparatus 1 (Presence) to the state where no person is present (Absence), that is, when detecting that the person has left the information processing apparatus 1 (Leave), the information processing apparatus 1 determines that the user has left and causes the system to make a transition to the standby state.

The information processing apparatus 1 detects the presence of a person in a predetermined forward range.

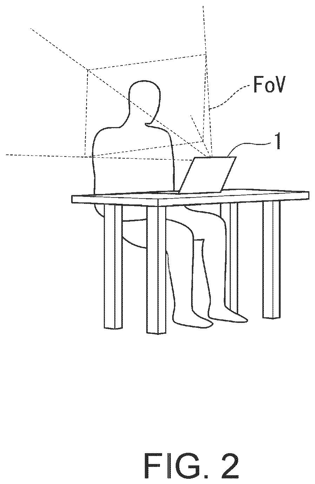

FIG. 2 is a diagram illustrating an example of a person detection range of the information processing apparatus 1 according to the present embodiment. In the illustrated example, a detection range FoV (Field of View: detection viewing angle) in front of the information processing apparatus 1 is a person detectable range. For example, the information processing apparatus 1 detects an area of a face image (hereinafter called a "face area") with a face captured therein from a captured image captured by imaging forward (on the front side) to determine whether or not a person (user) is present in front of the information processing apparatus 1. The detection range FoV corresponds to an imaging angle of view at which the information processing apparatus 1 captures an image. When the face area is detected from the captured image, the information processing apparatus 1 determines that the user is present. On the other hand, when no face area is detected from the captured image, the information processing apparatus 1 determines that no user is present.

For example, when determining that the user is present by detecting the face area from the captured image in the standby state, the information processing apparatus 1 boots the system from the standby state. Further, the information processing apparatus 1 executes system authentication processing to authenticate whether or not the user is an authorized user by system processing after booting the system. The authorized user is a user registered in advanced as a user using the information processing apparatus 1. When determining that the user is the authorized user, the information processing apparatus 1 allows use thereof (allows login) and makes the transition to the normal operating state. On the other hand, when determining that the user is not the authorized user, the information processing apparatus 1 does not allow use thereof (does not allow login) and continues waiting for authentication. User authentication by this system authentication processing upon bootup is called "login authentication" below.

As the method of login authentication, there are password authentication to authenticate a user by the user entering a password on the keyboard, PIN authentication to authenticate the user by the user entering a PIN (Personal Identification Number), face authentication to authenticate the user by the face of the user, fingerprint authentication to authenticate the user with the user's fingerprint, and the like. When login authentication by face authentication is enabled, the information processing apparatus 1 performs face authentication by comparing feature information based on the face image of the face area detected from the captured image with feature information based on a face image of the authorized user registered in advance.

Here, when booting the system from the standby state only by face detection to detect the face area from the captured image in the HPD processing, the information processing apparatus 1 will be booted up even if a person other than the authorized user approaches. Therefore, the information processing apparatus 1 registers a user ID (hereinafter called "HPD user ID") to authenticate whether or not the person is the authorized user in the HPD processing based on the authentication result upon login authentication.

For example, when the login authentication after booting the system is successful, it is assumed that the authorized user is present in front of the information processing apparatus 1. Therefore, the information processing apparatus 1 detects a face area from a captured image captured when the login authentication is successful, and sets the detected face image as a face image of the authorized user, and registers feature information based on the face image as an HPD user ID. When a face area is detected from a captured image in the HPD processing, the information processing apparatus 1 performs face authentication using the registered HPD user ID. Then, when the authentication is successful (that is, when the authorized user is detected), the information processing apparatus 1 boots the system, while when the authentication is unsuccessful (that is, when a person other than the authorized user is detected), the information processing apparatus 1 performs such control as to keep the standby state without booting the system.

However, when performing face authentication upon login authentication, high power consumption is allowed to enable high-precision face authentication, while when performing HPD processing in the standby state, it is desirable to reduce power consumption as much as possible. For example, in the case of face authentication in the login authentication, a captured image captured with an IR (Infrared Rays) camera is used, while in the case of face authentication in the HPD processing of the standby state, a captured image captured with an RGB camera is used. Further, the frame rate at which a captured image in the HPD processing of the standby state is set lower than the frame rate at which a captured image used for face authentication in the login authentication is captured.

Due to the difference between the face authentication upon login authentication and the face authentication in the HPD processing mentioned above, for example, even when a face orientation is tilted by approximately ±20° from the front, the face authentication in the login authentication is possible, but only a range in which the face orientation is tilted by approximately ±15° from the front can be authenticated as the same face in the case of the face authentication in the HPD processing. Therefore, it is desirable to register, as the HPD user ID, feature information based on a face image of a front face as much as possible. Note that the fact that the face orientation is forward means an orientation in which the face is facing a direction of the imaging unit such as the IR camera or the RGB camera mentioned above, where the front face is in a state of being captured in the captured image.

For example, the information processing apparatus 1 registers, as the HPD user ID, feature information based on a face image when the face is facing forward within a predetermined period of time (for example, within five seconds) after authentication in the login authentication is successful. The reason why it is limited within the predetermined period of time (for example, within five seconds) is to reduce the possibility of being replaced by a user other than the authorized user.

Further, when a face image is registered as the HPD user ID every time authentication is successful in the system login authentication, there is a concern that face images of similar faces of the same person (the authorized user) are registered in large numbers, and registration slots (memory capacity) are filled up immediately. Since it is desirable to keep face image registration information inside a processor for face detection from the perspective of security, the system side cannot determine whether a detected face image is already registered or not.

Therefore, when the system login authentication is successful, the information processing apparatus 1 determines whether or not to register the HPD user ID depending on the factor (trigger) when booting the system from the standby state. For example, when booting the system from the standby state due to the fact that there is input to an HID (Human Interface Device), the information processing apparatus 1 can assume that the HPD user ID of a person who made input to this HID (hereinafter simply called "HID input") is not registered because the approach of the authorized user is not detected in the HPD processing. Therefore, when booting the system due to the factor that there is HID input, the information processing apparatus 1 executes user registration processing to register, as the HPD user ID, feature information based on a face image when the face is facing forward within the predetermined period of time (for example, within five seconds) after the authentication in the login authentication is successful.

On the other hand, when the factor of booting the system is not HID input, since it is considered that the system is booted, for example, due to the fact that the approach of the authorized user whose HPD user ID is already registered is detected by the HPD processing, the information processing apparatus 1 does not execute the user registration processing to avoid duplicate registration of the HPD user ID of the same person as that of the registered HPD user ID. Note that, in an unregistered state where none of HPD user IDs are registered, when authentication in the system login authentication is successful, the information processing apparatus 1 executes the user registration processing to register the HPD user ID regardless of the factor of booting the system.

Thus, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

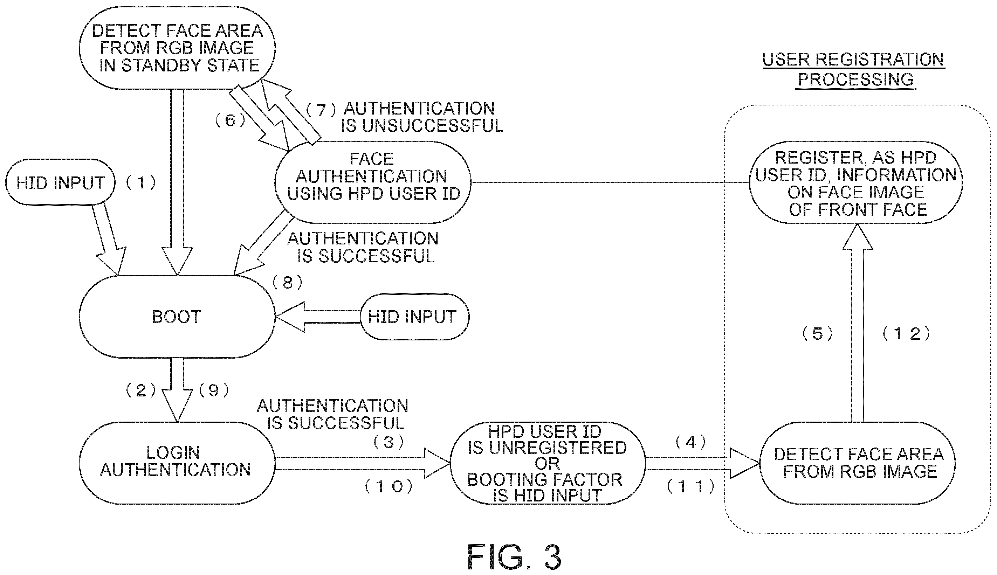

FIG. 3 is a diagram illustrating an overview of HPD processing using an HPD user ID according to the present embodiment. Referring to FIG. 3, the overview of HPD processing according to the present embodiment will be described in order of (1) to (12). In the following, a captured image captured by the information processing apparatus 1 imaging forward (on the front side) with the RGB camera in the standby state is called an "RGB image." On the other hand, a captured image captured by the information processing apparatus 1 imaging forward (on the front side) with the IR camera upon login authentication after booting the system is called an "IR image."
(1) First, it is assumed that the HPD user ID is in an unregistered state at this time. The information processing apparatus 1 detects a face area from an RGB image captured with the RGB camera in the standby state to boot the system. The information processing apparatus 1 also boot the system when there is HID input in the standby state.
(2) After bootup, the information processing apparatus 1 performs login authentication for allowing only the authorized user to use the system. For example, the information processing apparatus 1 detects a face area from an IR image captured with the IR camera in an event of system login authentication after bootup to execute face authentication processing based on a face image of the detected face area. Note that the authentication method of login authentication may also be an authentication method other than face authentication.
(3) When the login authentication is successful, the information processing apparatus 1 determines whether or not the HPD user ID is registered and the factor of booting the system (booting factor).
(4) When the HPD user ID is unregistered, or when the booting factor is HID input, the information processing apparatus 1 executes user registration processing to register the HPD user ID. In the user registration processing, the information processing apparatus 1 first detects a face area from an RGB image captured with the RGB camera within the predetermined period of time (for example, within five seconds) after the login authentication is successful.
(5) Based on the face area detected from the RGB image captured with the RGB camera within the predetermined period of time (for example, within five seconds), the information processing apparatus 1 registers, as the HPD user ID, feature information on a face image when the face is facing forward.
(6) Next, when the face area is detected from the RGB image captured with the RGB camera in the standby state, the information processing apparatus 1 performs face authentication to authenticate whether or not the face is the face of the authorized user using the HPD user ID registered at (5) mentioned above. For example, when the face area is detected from the RGB image in the standby state, the information processing apparatus 1 performs face authentication by comparing feature information based on the face image in the detected face area with the HPD user ID.
(7) When the face authentication at (6) mentioned above is unsuccessful, the information processing apparatus 1 determines that the face is not the face of the authorized user, and continues the standby state without booting the system.
(8) On the other hand, when the face authentication at (6) mentioned above is successful, the information processing apparatus 1 determines that the face is the face of the authorized user to boot the system. The information processing apparatus 1 also boots the system when there is HID input in the standby state.
(9) After bootup, the information processing apparatus 1 performs login authentication processing as described at (2) mentioned above.
(10) When the login authentication is successful, the information processing apparatus 1 determines whether or not the HPD user ID is registered and the factor of booting the system (booting factor) as described at (3) mentioned above. Note that the information processing apparatus 1 determines that the HPD user ID is registered here. When determining that the booting factor is not HID input, the information processing apparatus 1 determines that the system is booted due to the approach of the authorized user whose HPD user ID is already registered, and does not execute the user registration processing.
(11) and (12) On the other hand, when the booting factor is HID input, the information processing apparatus 1 determines that the HPD user ID of a person who made HID input is not registered, and executes the user registration processing as described at (4) and (5) mentioned above.

Thereafter, (6) to (12) mentioned above are repeated. Thus, since the information processing apparatus 1 registers, as the HPD user ID, feature information based on a face image when the face is facing forward within the predetermined period of time (for example, five seconds) after the login authentication is successful to perform face authentication using the HPD user ID in the HPD processing, the face of the authorized user can be authenticated properly.

Next, the configurations of the information processing apparatus 1 according to the present embodiment will be described in detail.

### [Appearance Configuration of Information Processing Apparatus]

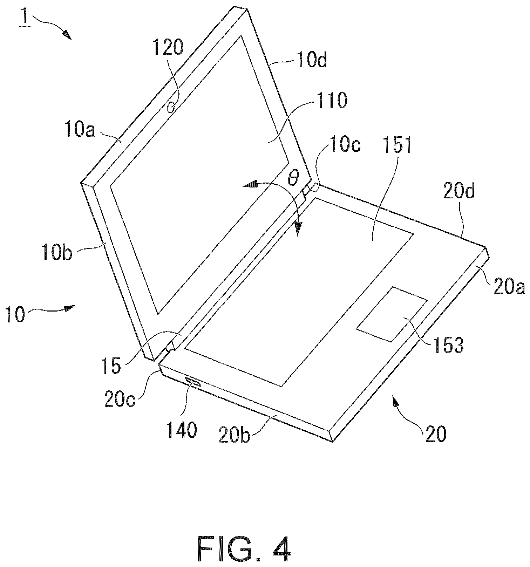

FIG. 4 is a perspective view illustrating an appearance configuration example of the information processing apparatus 1 according to the present embodiment.

The information processing apparatus 1 includes a first chassis 10, a second chassis 20, and a hinge mechanism 15. The first chassis 10 and the second chassis 20 are coupled by using the hinge mechanism 15. The first chassis 10 and the second chassis 20 are coupled by using the hinge mechanism 15. The first chassis 10 is rotatable around an axis of rotation formed by the hinge mechanism 15 relative to the second chassis 20. An open angle by the rotation between the first chassis 10 and the second chassis 20 is denoted by "θ" in FIG. 4.

The first chassis 10 is also called A cover or a display chassis. The second chassis 20 is also called C cover or a system chassis. In the following description, side faces on which the hinge mechanism 15 is provided among side faces of the first chassis 10 and the second chassis 20 are referred to as side faces 10c and 20c, respectively. Among the side faces of the first chassis 10 and the second chassis 20, faces opposite to the side faces 10c and 20c are referred to as side faces 10a and 20a, respectively. In this figure, the direction from the side face 20a toward the side face 20c is referred to as "rear," and the direction from the side face 20c toward the side face 20a is referred to as "front." The right hand and the left hand in the rearward direction are referred to as "right" and "left," respectively. Left side faces of the first chassis 10 and the second chassis 20 are referred to as side faces 10b and 20b, respectively, and right side faces thereof are referred to as side faces 10d and 20d, respectively. Further, a state where the first chassis 10 and the second chassis 20 overlap each other and are completely closed (a state of open angle θ = 0°) is referred to as a "closed state." The faces of the first chassis 10 and the second chassis 20 on the face-to-face sides in the closed state are referred to as respective "inner faces," and the faces opposite to the inner faces are referred to as "outer faces." Further, a state opposite to the closed state, where the first chassis 10 and the second chassis 20 are open, is referred to as an "open state."

The appearance of the information processing apparatus 1 in FIG. 4 illustrates an example of the open state. The open state is a state where the side face 10a of the first chassis 10 and the side face 20a of the second chassis 20 are separated. In the open state, the respective inner faces of the first chassis 10 and the second chassis 20 appear. The open state is one of states when the user uses the information processing apparatus 1, and the information processing apparatus 1 is often used in a state where the open angle is typically about θ = 100° to 130°. Note that the range of open angles θ to be the open state can be set arbitrarily according to the range of angles rotatable by the hinge mechanism 15 or the like.

A display unit 110 is provided on the inner face of the first chassis 10. The display unit 110 is configured to include a liquid crystal display (LCD) or an organic EL (Electro Luminescence) display, and the like. Further, an imaging unit 120 is provided in a peripheral area of the display unit 110 on the inner face of the first chassis 10. For example, the imaging unit 120 is arranged on the side of the side face 10a in the peripheral area of the display unit 110. Note that the position at which the imaging unit 120 is arranged is just an example, and the imaging unit 120 may also be arranged at any other position as long as the imaging unit 120 can image a direction (frontward) to face the inner face of the first chassis 10.

In the open state, the imaging unit 120 images a predetermined imaging range in the direction (frontward) to face the inner face of the first chassis 10. The predetermined imaging range is a range of angles of view defined by an image sensor included in the imaging unit 120 and an optical lens provided in front of the imaging surface of the image sensor, which corresponds to the person (face) detection range FoV illustrated in FIG. 2. For example, the imaging unit 120 can capture an image including a person (for example, the user) present in front of the information processing apparatus 1.

Further, a power button 140 is provided on the side face 20b of the second chassis 20. The power button 140 is an operating element used by the user to give an instruction to power on or power off, the transition from the standby state to the normal operating state, the transition from the normal operating state to the standby state, or the like. Further, a keyboard 151 and a touch pad 153 are provided on the inner face of the second chassis 20 as an input device to accept user operation input. Note that a touch sensor may also be provided as the input device instead of or in addition to the keyboard 151 and the touch pad 153, or a mouse and an external keyboard may be connected. When the touch sensor is provided, an area corresponding to the display surface of the display unit 110 may be constructed as a touch panel to accept operations. Further, a microphone used to input voice may be included in the input device.

### [Hardware Configuration of Information Processing Apparatus]

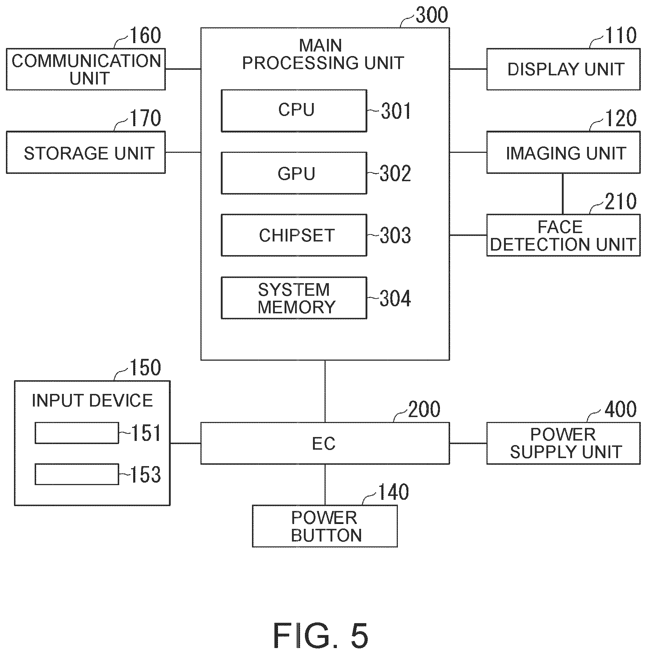

FIG. 5 is a schematic block diagram illustrating an example of the hardware configuration of the information processing apparatus 1 according to the present embodiment. The information processing apparatus 1 is configured to include the display unit 110, the imaging unit 120, the power button 140, an input device 150, a communication unit 160, a storage unit 170, an EC (Embedded Controller) 200, a face detection unit 210, a main processing unit 300, and a power supply unit 400. The display unit 110 displays display data (images) generated based on system processing executed by the main processing unit 300, processing of an application program(s) running on the system processing, and the like.

The imaging unit 120 captures an image of an object within a predetermined angle of view (for example, within the detection range FoV illustrated in FIG. 2) in a direction (frontward) to face the inner face of the first chassis 10, and outputs the captured image to the face detection unit 210 and the main processing unit 300. For example, the imaging unit 120 includes the RGB camera and the IR (Infrared Rays) camera. The RGB camera is a normal camera to capture images based on visible light. The IR camera is a camera to capture images based on infrared rays emitted from the object. For example, the IR camera irradiates infrared rays upon imaging to capture an image based on infrared rays reflected from the object.

Since the IR camera irradiates infrared rays, for example, upon imaging, power consumption upon imaging is higher than that of the RGB camera. Therefore, for example, the RGB camera is used instead of the IR camera when detecting the face area and performing face authentication from an RGB image in the standby state because it is desired to reduce standby power as much as possible. On the other hand, for example, the IR camera is used to further improve authentication accuracy when detecting the face area and performing face authentication from an IR image in login authentication by face authentication. Note that both the IR camera and the RGB camera may also be used when performing login authentication by face authentication.

The power button 140 outputs, to the EC 200, operation signals according to user operations. The input device 150 is an input unit for accepting user input, which is configured to include, for example, the keyboard 151 and the touch pad 153. In response to accepting operations on the keyboard 151 and the touch pad 153, the input device 150 outputs, to the EC 200, operation signals indicative of the operation contents.

The communication unit 160 is connected to other devices communicably through a wireless or wired communication network to transmit and receive various data. For example, the communication unit 160 is configured to include a wired LAN interface such as the Ethernet (registered trademark), a wireless LAN interface such as Wi-Fi (registered trademark), and the like.

The storage unit 170 is configured to include storage media, such as an HDD (Hard Disk Drive) or an SSD (Solid State Drive), a RAM (Random Access Memory), a ROM (Read Only Memory), and the like. The storage unit 170 stores an OS, device drivers, various programs such as applications, and various data acquired by the operation of the programs.

The power supply unit 400 supplies power to each unit of the information processing apparatus 1 according to the operating state of each unit. The power supply unit 400 includes a DC (Direct Current)/DC converter. The DC/DC converter converts the voltage of DC power, supplied from an AC (Alternate Current)/DC adapter or a battery (battery pack), to a voltage required for each unit. The power with the voltage converted by the DC/DC converter is supplied to each unit through each power system. For example, the power supply unit 400 supplies power to each unit through each power system based on a control signal input from the EC 200.

The EC 200 is a microcomputer configured to include a CPU (Central Processing Unit), a RAM, a ROM, an I/O (Input/Output) logic circuit, and the like. The CPU of the EC 200 reads a control program (firmware) prestored in the own ROM and executes the read control program to fulfill the functionality. The EC 200 operates independently of the main processing unit 300 to control the operation of the main processing unit 300 and manage the operating state of the main processing unit 300. Further, the EC 200 is connected to the power button 140, the input device 150, the power supply unit 400, and the like.

For example, the EC 200 communicates with the power supply unit 400 to acquire information on a battery state (remaining battery capacity, and the like) from the power supply unit 400 and to output, to the power supply unit 400, a control signal or the like in order to control the supply of power according to the operating state of each unit of the information processing apparatus 1. Further, the EC 200 acquires operation signals from the power button 140 and the input device 150, and outputs, to the main processing unit 300, an operation signal related to processing of the main processing unit 300 among the acquired operation signals.

The face detection unit 210 is configured to include a processor to process image data of a captured image captured by the imaging unit 120. The face detection unit 210 acquires the image data of the captured image captured by the imaging unit 120, and temporarily stores the acquired image data in a memory. The memory in which the image data is stored may be a system memory 304, or an unillustrated memory in the face detection unit 210.

For example, the face detection unit 210 processes the image data of the captured image acquired from the imaging unit 120, and performs face detection processing to detect a face area from the captured image, face authentication processing to authenticate a face image of the detected face area, and the like. The face detection unit 210 transmits, to a chipset 303 of the main processing unit 300, the detection result of the face detection processing, the authentication result of the face authentication processing, and the like.

Note that the face detection unit 210 is operating not only in the normal operating state but also in the standby state. In the standby state, for example, the face detection unit 210 acquires image data of an RGB image captured with the RGB camera of the imaging unit 120 to detect a face area. By capturing the image using the RGB camera without using the IR camera, power consumption in the standby state (standby power) can be reduced. On the other hand, in the login authentication processing after bootup, the face detection unit 210 acquires image data of an IR image captured with the IR camera of the imaging unit 120 (or captured images captured with both the RGB camera and the IR camera) to detect a face area and perform face authentication so that the authentication accuracy can be improved.

For example, in the HPD processing described with reference to FIG. 3, the face detection unit 210 performs face authentication using the HPD user ID registered when the authentication by the login authentication processing is successful. The functional configuration in this HPD processing will be described in detail later.

The main processing unit 300 is configured to include a CPU (Central Processing Unit) 301, a GPU (Graphic Processing Unit) 302, the chipset 303, and the system memory 304, where processing of various application programs is executable on the OS (Operating System) by system processing based on the OS.

The CPU 301 executes processing by a BIOS, processing by the OS, processing by application programs running on the OS, and the like. The CPU 301 controls the operating state of the system based on instructions from the chipset 303 and the like. For example, the CPU 301 executes boot processing to boot the system from the standby state. Further, after the system is booted from the standby state, the CPU 301 executes login authentication processing to authenticate whether or not a person is the authorized user, and when the authentication is successful, the CPU 301 makes the transition to the normal operating state.

For example, the CPU 301 executes authentication processing by face authentication in the login authentication. Note that, in the login authentication, the CPU 301 may also execute authentication processing other than the face authentication (for example, password authentication, PIN authentication, or fingerprint authentication).

When determining that the person is the authorized user in the login authentication (that the authentication is successful), the CPU 301 allows use (allows login), and makes the transition to the normal operating state. On the other hand, when determining that the person is not the authorized user in the login authentication (that the authentication is unsuccessful), the CPU 301 does not allow use (does not allow login) and continues waiting for login authentication.

The GPU 302 is connected to the display unit 110. The GPU 302 executes image processing under the control of the CPU 301 to generate display data. The GPU 302 outputs the generated display data to the display unit 110.

The chipset 303 has a function as a memory controller, a function as an I/O controller, and the like. For example, the chipset 303 controls reading data from and writing data to the system memory 304, the storage unit 170, and the like by the CPU 301 and the GPU 302. Further, the chipset 303 controls input/output of data from the communication unit 160, the display unit 110, and the EC 200. Further, the chipset 303 has a function as a sensor hub. For example, in the HPD processing, the chipset 303 acquires the face detection result from the face detection unit 210 to detect the presence of a person (user) based on the detection result in order to control the operating state of the system.

The system memory 304 is used as a reading area of a program executed by the CPU 301 and a working area to write processed data. Further, the system memory 304 temporarily stores image data of captured images captured by the imaging unit 120.

Note that the CPU 301, the GPU 302, and the chipset 303 may also be integrated as one processor, or some or each of them may be configured as an individual processor, respectively. For example, in the normal operating state, the CPU 301, the GPU 302, and the chipset 303 are all operating, but in the standby state, only at least some of the functions of the chipset 303 are operating. In the standby state, at least only functions required for HPD processing upon bootup are operating.

### [Functional Configuration of Information Processing Apparatus]

Next, a functional configuration in which the information processing apparatus 1 controls the operating state of the system by the HPD processing will be described.

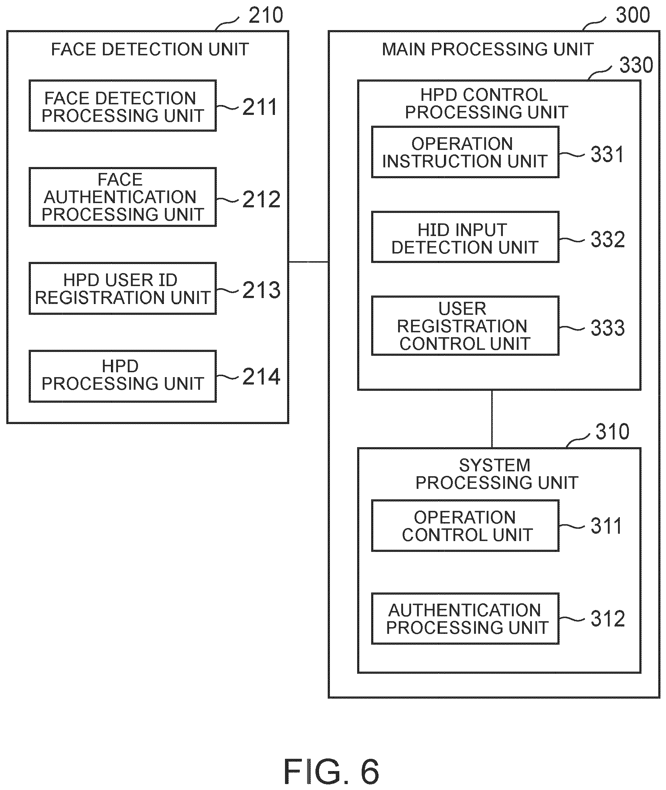

FIG. 6 is a block diagram illustrating an example of the functional configuration of the information processing apparatus 1 according to the present embodiment. The information processing apparatus 1 includes the face detection unit 210 and the main processing unit 300. The main processing unit 300 includes a system processing unit 310 and an HPD control processing unit 330. The face detection unit 210 corresponds to the face detection unit 210 illustrated in FIG. 5, which is a functional component implemented by executing a program in the face detection unit 210. The system processing unit 310 and the HPD control processing unit 330 are functional components implemented by the main processing unit 300 executing the OS and a program running on the OS. For example, the system processing unit 310 is a functional component implemented by the CPU 301 executing the OS program. Further, the HPD control processing unit 330 is a functional component implemented by the CPU 301 or the chipset 303 executing the program running on the OS.

The face detection unit 210 includes a face detection processing unit 211, a face authentication processing unit 212, an HPD user ID registration unit 213, and an HPD processing unit 214. Further, the system processing unit 310 includes an operation control unit 311 and an authentication processing unit 312. Further, the HPD control processing unit 330 includes an operation instruction unit 331, an HID input detection unit 332, and a user registration control unit 333.

The face detection processing unit 211 reads, from the system memory 304, image data of captured images captured by the imaging unit 120 at a given frame rate (at a given frequency) to detect a face area from each of the captured images, respectively. As the face detection method, any detection method using a face detection algorithm for detecting a face based on facial feature information, trained data (learned model) subjected to machine learning based on the facial feature information, a face detection library, or the like can be applied. Further, the frame rate in a case where the imaging unit 120 captures images is controlled, for example, to 4 FPS (Frames Per Second) when performing the HPD processing in the standby state, to 15 FPS upon login authentication using face authentication, to 15 FPS within the predetermined period of time (for example, within five seconds) after the login authentication is successful, to 1 FPS when performing the HPD processing in the normal operating state, or the like.

For example, in the standby state, the face detection processing unit 211 detects a face area from an RGB image captured at 4 FPS using the RGB camera of the imaging unit 120 and outputs coordinate information of the face area and the like as the detection results. Further, for example, upon login authentication, the face detection processing unit 211 detects a face area from an IR image captured at 15 FPS using the IR camera of the imaging unit 120, and outputs coordinate information of the face area and the like as the detection results. Note that upon login authentication, the face detection processing unit 211 may also detect a face area from images captured by using the IR camera and the RGB camera of the imaging unit 120.

Further, for example, the face detection processing unit 211 detects a face area from an RGB image captured at 15 FPS using the RGB camera of the imaging unit 120 within the predetermined period of time (for example, five seconds) after the login authentication is successful, and outputs coordinate information on the face area, face orientation information, and the like as the detection results. The face orientation information indicates a face angle of the face image inside the detected face area. For example, the face angle is an angle corresponding to the face orientation with the direction of the imaging unit 120 (the direction in which the face is facing forward) as a reference angle (for example, 0°).

Further, for example, in the normal operating state, the face detection processing unit 211 detects a face area from an RGB image captured at 1 FPS using the RGB camera of the imaging unit 120, and outputs the coordinate information of the face area and the like as the detection results.

The face authentication processing unit 212 executes the face authentication processing to authenticate whether or not the face image in the detected face area is the face image of the authorized user. For example, upon system login authentication, the face authentication processing unit 212 performs face authentication by comparing a face image detected from an IR image captured at 15 FPS using the IR camera of the imaging unit 120 with the face image of the authorized user registered in advance as user information (account information) for login to the system. Specifically, for example, upon system login authentication, the face authentication processing unit 212 performs face authentication by comparing feature information based on the face image detected from the IR image with feature information based on the preregistered face image of the authorized user.

Note that the face image of the authorized user registered as the user information (account information) is, for example, a face image detected from an IR image captured at 15 FPS using the IR camera of the imaging unit 120 on an image registration menu for face authentication in the system settings.

Further, in the case of the HPD processing, the face authentication processing unit 212 performs face authentication based on feature information on a face image detected from an RGB image captured using the RGB camera of the imaging unit 120, and feature information on a face image of the authorized user registered as the HPD user ID. For example, the face authentication processing unit 212 performs face authentication by comparing feature information on a face image detected from an RGB image captured at 4 FPS using the RGB camera of the imaging unit 120 in the HPD processing with feature information on the face image of the authorized user registered as the HPD user ID.

The HPD user ID registration unit 213 registers, as the HPD user ID (the feature information on the face image of the authorized user), feature information on a face image when the face is facing forward among face images detected from RGB images by the face detection processing unit 211 within the predetermined period of time (for example, five seconds) after the authentication by the login authentication processing is successful. For example, the HPD user ID registration unit 213 stores and registers the HPD user ID in the system memory 304 or an unillustrated memory in the face detection unit 210.

For example, when the face angle of the face image detected from the RGB image by the face detection processing unit 211 within the predetermined period of time (for example, five seconds) after the authentication by the login authentication processing is successful is within a predetermined angle range based on the direction of the imaging unit 120 (the direction in which the face is facing forward) (for example, within ±15°), the HPD user ID registration unit 213 determines that the face orientation is forward.

Based on the detection result of the face detection processing by the face detection processing unit 211 and the authentication result of the face authentication processing by the face authentication processing unit 212, the PHD processing unit 214 outputs information indicative of the detection result of the HPD processing. For example, in the case where the HPD user ID is already registered, when the face area is detected from the RGB image by the face detection processing unit 211 and the face authentication by the face authentication processing unit 212 is successful, the HPD processing unit 214 outputs Presence information indicating that the authorized user is present in front of the information processing apparatus 1.

Note that, when the HPD user ID is not registered, although it cannot be determined whether or not the face is the face of the authorized user, the HPD processing unit 214 assumes that the user is present in front of the information processing apparatus 1 based on the fact that the face area is detected from the RGB image by the face detection processing unit 211 in the standby state, and outputs the Presence information.

On the other hand, when the face area is no longer detected from the RGB image by the face detection processing unit 211 after booting the system, the HPD processing unit 214 outputs Absence information indicating that no user is present in front of the information processing apparatus 1. Further, even in the case where the face area is detected from the RGB image by the face detection processing unit 211 after booting the system, when the face authentication by the face authentication processing unit 212 is unsuccessful, since the user present in front of the information processing apparatus 1 is not the authorized user, the HPD processing unit 214 outputs Absence information.

When acquiring the Presence information output from the HPD processing unit 214 in the standby state, the operation instruction unit 331 gives an instruction to boot the system from the standby state. For example, the operation instruction unit 331 outputs, to the operation control unit 311, boot instruction information indicative of the instruction to boot the system from the standby state. Further, the operation instruction unit 331 does not give the instruction to boot the system while acquiring the Absence information from the HPD processing unit 214 in the standby state.

Note that, when acquiring the Absence information from the HPD processing unit 214 in the normal operating state, the operation instruction unit 331 gives an instruction to cause the system to make the transition to the standby state. For example, the operation instruction unit 331 outputs, to the operation control unit 311, standby instruction information indicative of the instruction to cause the system to make the transition to the standby state.

When acquiring the boot instruction information output from the operation instruction unit 331, the operation control unit 311 executes a program of the system to boot the system from the standby state. Further, after booting the system from the standby state, the operation control unit 311 raises a login authentication event. Then, the operation control unit 311 waits until the authentication is successful without allowing login. When the authentication is successful, the operation control unit 311 allows login, and makes the transition to the normal operating state.

Note that, when acquiring the standby instruction information output from the operation instruction unit 331 in the normal operating state, the operation control unit 311 causes the system to make the transition from the normal operating state to the standby state.

When the login authentication event occurs, the authentication processing unit 312 executes login authentication processing to authenticate whether or not the user is the authorized user. For example, the authentication processing unit 312 executes login authentication processing by face authentication, password authentication, PIN authentication, fingerprint authentication, or the like. For example, when executing the authentication processing by face authentication, the authentication processing unit 312 acquires the authentication result of the face authentication from the face detection unit 210 to execute the login authentication processing based on the acquired authentication result. When the authentication is successful, the authentication processing unit 312 determines that the user is the authorized user, while when the authentication is unsuccessful, the authentication processing unit 312 determines that the user is not the authorized user.

Note that, in the case of password authentication or PIN authentication, the authentication processing unit 312 acquires, through the EC 200, an operation signal with a user operation on the keyboard 151. Then, based on the acquired operation signal, the authentication processing unit 312 executes authentication processing by comparing a password or a PIN entered with the user operation with a preregistered password or PIN. Further, in the case of fingerprint authentication, the authentication processing unit 312 executes the authentication processing by comparing a fingerprint acquired using an unillustrated fingerprint sensor with a preregistered fingerprint.

The HID input detection unit 332 detects HID input. For example, the HID input detection unit 332 acquires, through the EC 200, an input signal (operation signal) according to user input on the input device 150 or the like to detect HID input.

When the system is booted, the user registration control unit 333 controls whether or not to cause the face detection unit 210 to execute user registration processing to register the HPD user ID after booting the system depending on whether or not the booting factor is HID input. For example, when the system is booted due to the factor that there is HID input, the user registration control unit 333 causes the face detection unit 210 to execute the user registration processing. On the other hand, when the booting factor is not HID input, the user registration control unit 333 does not cause the face detection unit 210 to execute the user registration processing.

For example, when a difference between the timing when HID input is detected and the timing when the display of the display unit 110 is turned on due to the fact that the system is booted is within a predetermined time (for example, within 0.5 seconds), the user registration control unit 333 determines that the system booting factor is HID input.

In other words, the user registration control unit 333 determines whether or not the difference between the timing when HID input is detected and the timing when the display of the display unit 110 is turned on due to the fact that the system is booted is within the predetermined time. Then, when the determination result is true, the user registration control unit 333 causes the face detection unit 210 to execute the user registration processing after booting the system, while when the determination result is false, the user registration control unit 333 does not cause the face detection unit 210 to execute the user registration processing.

Here, in the present embodiment, when the system booting factor is not HID input, the fact that the face authentication is successful in the HPD processing is assumed as the booting factor in the state where the HPD user ID is registered. Therefore, in other words, it can also be said that, when the system is booted, the user registration control unit 333 controls whether or not to execute the user registration processing after booting the system depending on whether or not the booting factor is the fact that the face area is detected by the face detection processing and the face authentication by the face authentication processing is successful.

For example, when the system is booted due to a factor other than the success of the face authentication by the face authentication processing, the user registration control unit 333 may perform control to cause the face detection unit 210 to execute the user registration processing, while when the system is booted based on the success of the authentication result of the face authentication processing, the user registration control unit 333 may perform control not to cause the face detection unit 210 to execute the user registration processing.

Note that, in the unregistered state where no HPD user ID is registered, the user registration control unit 333 causes the face detection unit 210 to execute the user registration processing regardless of the system booting factor.

When the authentication result of the login authentication by the authentication processing unit 312 is successful after booting the system, the user registration control unit 333 determines whether or not to cause the face detection unit 210 to execute the user registration processing described above, and when determining to cause the face detection unit 210 to execute the user registration processing, the user registration control unit 333 notifies the face detection unit 210 of that effect.

For example, when determining to perform the user registration processing, the user registration control unit 333 notifies the face detection unit 210 of a user registration instruction to instruct the execution of the user registration processing at the timing when the login authentication is successful. The HPD user ID registration unit 213 of the face detection unit 210 is triggered by this notification of the user registration instruction to register, as the HPD user ID, feature information based on a face image (for example, a face image when the face is facing forward) detected within the predetermined period of time (for example, within five seconds) after the authentication by the login authentication processing is successful.

### [Operation by HPD Processing]

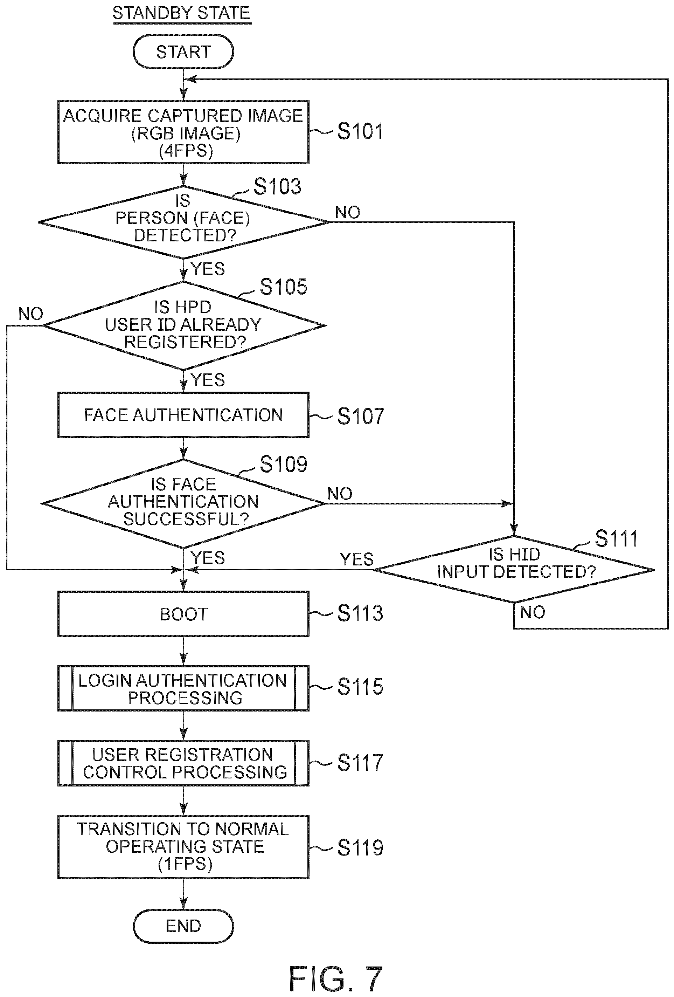

Next, the operation of processing to perform the authentication of the authorized user in the HPD processing in order to control the operating state of the system will be described. Referring first to FIG. 7, the operation of HPD processing in the standby state will be described. FIG. 7 is a flowchart illustrating an example of HPD processing in the standby state according to the present embodiment.

(Step S101) The face detection unit 210 acquires an RGB image captured by the imaging unit 120 in the standby state. In the standby state, the RGB image is captured by the imaging unit 120, for example, at a frame rate of 4 FPS. Then, the face detection unit 210 proceeds to a process in step S103.

(Step S103) The face detection unit 210 detects a face area (an area of a face image) from the RGB image acquired in step S101. When no face area is detected (NO), the procedure proceeds to a process in step S111. On the other hand, when a face area is detected (YES), the face detection unit 210 proceeds to a process in step S105.

(Step S105) The face detection unit 210 determines whether or not the HPD user ID is already registered. When determining that the HPD user ID is not registered (NO), the procedure proceeds to a process in step S113. On the other hand, when determining that the HPD user ID is already registered (YES), the face detection unit 210 proceeds to a process in step S107.

(Step S107) The face detection unit 210 performs face authentication based on feature information on the face image detected in step S103, and feature information on a face image of the authorized user registered as the HPD user ID. Then, the face detection unit 210 proceeds to a process in step S109.

(Step S109) The face detection unit 210 determines whether or not the face authentication in step S107 is successful. When determining that the face authentication is successful (YES), the face detection unit 210 outputs Presence information, and the procedure proceeds to the process in step S113. On the other hand, when determining that the face authentication is unsuccessful (NO), the procedure proceeds to the process in step S111.

(Step S111) The HPD control processing unit 330 determines whether or not HID input is detected. When no HID input is detected (NO), the procedure returns to the process in step S101. On the other hand, when determining that HID input is detected (YES), the HPD control processing unit 330 proceeds to the process in step S113.

(Step S113) When acquiring the Presence information output from the face detection unit 210, the HPD control processing unit 330 outputs, to the system processing unit 310, boot instruction information indicative of an instruction to boot the system from the standby state as a boot instruction by the HPD processing. Further, even when HID input is detected, the HPD control processing unit 330 outputs the boot instruction information to the system processing unit 310. When acquiring the boot instruction information output from the HPD control processing unit 330, the system processing unit 310 executes the program of the system to boot the system from the standby state. Then, the system processing unit 310 proceeds to a process in step S115.

(Step S115) After booting the system from the standby state, the system processing unit 310 raises a login authentication event to execute authentication processing to authenticate whether or not the user is the authorized user. For example, the system processing unit 310 executes authentication processing by face authentication, password authentication, PIN authentication, fingerprint authentication, or the like.

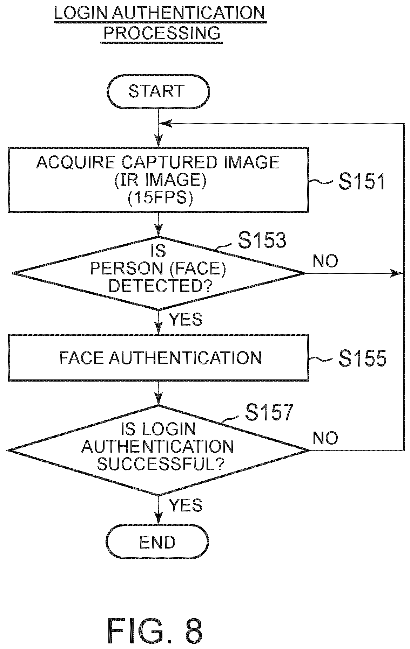

Here, the operation of login authentication processing by face authentication as an example of the login authentication processing in step S115 will be described with reference to FIG. 8.

FIG. 8 is a flowchart illustrating an example of login authentication processing by face authentication according to the present embodiment.

(Step S151) when the system processing unit 310 raises the login authentication event, the face detection unit 210 executes face detection processing and face authentication processing in login authentication. First, the face detection unit 210 acquires an IR image (or an IR image and an RGB image) captured by the imaging unit 120. In the login authentication processing, an IR image (or an IR image and an RGB image) is captured by the imaging unit 120, for example, at a frame rate of 15 FPS. Then, the face detection unit 210 proceeds to a process in step S153.

(Step S153) The face detection unit 210 detects a face area from the IR image (or the IR image and the RGB image) acquired in step S151. When no face area is detected (NO), the face detection unit 210 returns to the process in step S151. On the other hand, when the face area is detected (YES), the face detection unit 210 proceeds to a process in step S155.

(Step S155) The face detection unit 210 performs face authentication processing based on a face image of the face area detected in step S153. For example, the face detection unit 210 performs face authentication processing based on feature information of the face image of the detected face area and feature information on a face image of the authorized user registered in advance as user information (account information) for login to the system, and outputs the authentication result to the system processing unit 310.

(Step S157) The system processing unit 310 determines whether or not the login authentication is successful based on the authentication result of the face authentication processing output from the face detection unit 210. For example, when the authentication result of the face authentication processing is unsuccessful (when the face authentication is unsuccessful), the system processing unit 310 determines that the login authentication is unsuccessful (NO), and returns to step S151 without allowing login. On the other hand, when the authentication result of the face authentication processing is successful (when the face authentication is successful), the system processing unit 310 determines that the login authentication is successful (YES), allows login, and ends the login authentication processing. Then, the procedure proceeds to processes in step S117 and step S119 of FIG. 7.

Note that the example of the login authentication processing by face authentication is described here, but when the login authentication by password authentication, PIN authentication, or fingerprint authentication is successful, login is allowed and the login authentication processing is ended, and the procedure proceeds to the processes in step S117 and step S119 of FIG. 7 as well. Further, when the login authentication is successful, the system processing unit 310 notifies the HPD control processing unit 330 of that effect.

Note that there is no particular order of the processes in step S117 and step S119, and the processes are performed in parallel.

(Step S117) When the login authentication by the system processing unit 310 is successful in step S115 (step S157), the HPD control processing unit 330 executes user registration control processing to control the registration of the HPD user ID.

(Step S119) The system processing unit 310 executes login processing using the account of the authorized user whose login authentication is successful, and makes the transition to the normal operating state. Note that, in the normal operating state, the face detection unit 210 executes face detection processing (HPD processing) to detect a face area from an RGB image captured by the imaging unit 120, for example, at a frame rate of 1 FPS.

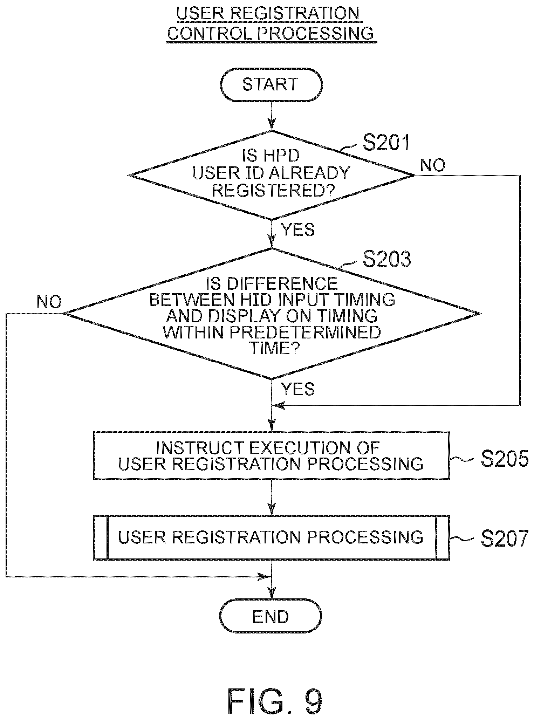

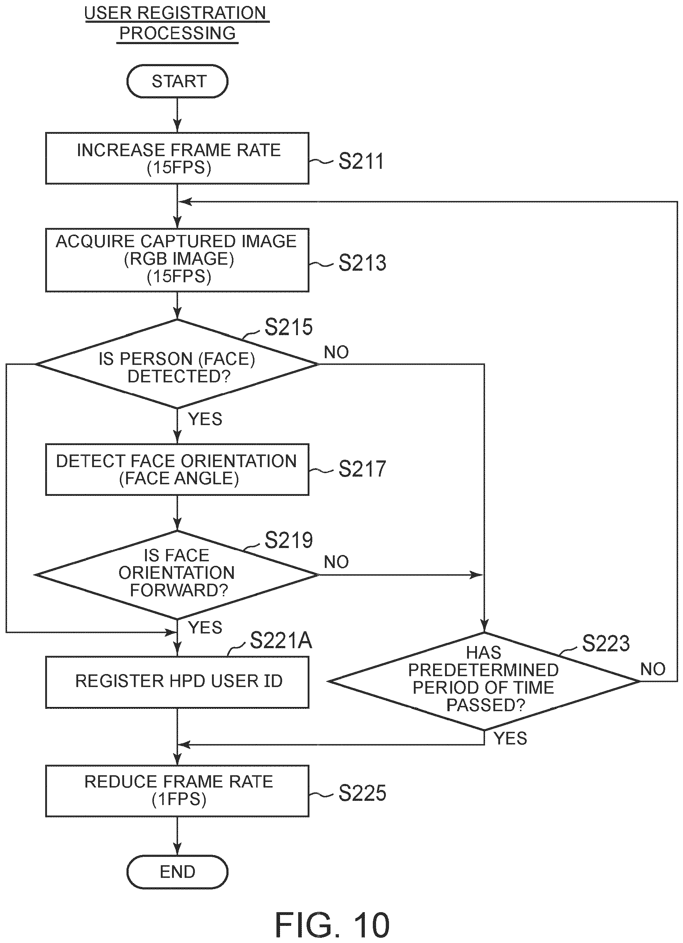

Here, specific operation of user registration control processing in step S115 will be described with reference to FIG. 9 and FIG. 10.

FIG. 9 is a flowchart illustrating an example of user registration control processing according to the present embodiment.

(Step S201) The HPD control processing unit 330 determines whether or not the HPD user ID is already registered in the face detection unit 210. When determining that the HPD user ID is in a registered state (YES), the HPD control processing unit 330 proceeds to a process in step S203. On the other hand, when determining that the HPD user ID is in an unregistered state (NO), the HPD control processing unit 330 proceeds to a process in step S205.

(Step S203) The HPD control processing unit 330 determines whether or not the booting factor when booting the system in step S113 of FIG. 7 is HID input. For example, the HPD control processing unit 330 determines whether or not a difference between the timing when HID input is detected and the timing when the display of the display unit 110 is turned on due to the fact that the system is booted is within a predetermined time. When the determination result in step S203 is false (NO), the HPD control processing unit 330 ends the user registration control processing without executing user registration processing. On the other hand, when the determination result in step S203 is true (YES), the HPD control processing unit 330 proceeds to the process in step S205.

(Step S205) The HPD control processing unit 330 notifies the face detection unit 210 of a user registration instruction to instruct the execution of user registration processing. Then, the procedure proceeds to a process in step S207.

(Step S207) When receiving the user registration instruction from the HPD control processing unit 330, the face detection unit 210 executes user registration processing to register the HPD user ID.

Next, the user registration processing in step S207 will be described with reference to FIG. 10. FIG. 10 is a flowchart illustrating an example of user registration processing according to the present embodiment. In the normal operating state, the face detection unit 210 detects a face area from an RGB image captured by the imaging unit 120, for example, at a frame rate of 1 FPS to execute HPD processing, but increases the frame rate when executing user registration processing.

(Step S211) The face detection unit 210 increases the frame rate, for example, to 15 FPS, and proceeds to a process in step S213.

(Step S213) The face detection unit 210 acquires an RGB image captured by the imaging unit 120, for example, at a frame rate of 15 FPS, and proceeds to a process in step S215.

(Step S215) The face detection unit 210 detects a face area (an area of a face image) from the RGB image acquired in step S213. When no face area is detected (NO), the face detection unit 210 proceeds to a process in step S223. On the other hand, when the face area is detected (YES), the face detection unit 210 proceeds to a process in step S217.

(Step S217) The face detection unit 210 detects a face orientation (face angle) of the face image in the face area detected in step S215. Then, the face detection unit 210 proceeds to a process in step S219.

(Step S219) The face detection unit 210 determines whether or not the face orientation detected in step S217 is forward. For example, when the face angle detected in step S217 is within a predetermined angle range (for example, within ±5°) relative to the direction of the imaging unit 120 (front, face angle = 0°), the face detection unit 210 determines that the face orientation is forward. When determining that the face orientation is not forward (NO), the face detection unit 210 proceeds to the process in step S223. On the other hand, when determining that the face orientation is forward (YES), the face detection unit 210 proceeds to a process in step S221A.

(Step S221A) The face detection unit 210 registers feature information based on the face image in which the face orientation is determined to be forward as the HPD user ID (feature information based on a face image of the authorized user). Then, the face detection unit 210 proceeds to a process in step S225.

(Step S223) The face detection unit 210 determines whether or not a predetermined period of time (for example, five seconds) has passed since the login authentication was successful. When determining that the predetermined period of time (for example, five seconds) has not passed (NO), the face detection unit 210 returns to the process in step S213. On the other hand, when determining that the predetermined period of time (for example, five seconds) has passed (YES), the face detection unit 210 proceeds to the process in step S225.

(Step S225) The face detection unit 210 reduces the frame rate, for example, to 1 FPS, and ends the user registration processing.

### [Summary of Embodiment]

As described above, the information processing apparatus 1 according to the present embodiment includes the system memory 304 (an example of a memory) which temporarily stores a program of the system, the face detection unit 210 (an example of a first processor), and the main processing unit 300 (an example of a second processor). The face detection unit 210 executes face detection processing to detect an area of a face image (a face area) with a face captured therein from a captured image (for example, an RGB image) captured by the imaging unit 120, and face authentication processing to authenticate the face based on feature information (an example of information) on the detected face image and the HPD user ID (an example of information on a face image of the authorized user). The main processing unit 300 executes the program of the system mentioned above to boot the system from the standby state based on the fact that the face area is detected by the face detection processing and face authentication by the face authentication processing is successful. Further, when booting the system, the main processing unit 300 controls whether or not to cause the face detection unit 210 to execute user registration processing to register, as the HPD user ID, the feature information on the face image detected by the face detection processing after booting the system depending on whether or not the booting factor is HID input (input to an HID).

Thus, in a configuration that can boot the system by performing face authentication of the authorized user, since the information processing apparatus 1 controls whether or not to register the HPD user ID for the face authentication of the authorized user based on the detected face image after booting the system depending on whether or not the system booting factor is HID input, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

For example, when the system is booted due to the factor that there is HID input, the main processing unit 300 causes the face detection unit 210 to execute user registration processing, while when the booting factor is not HID input, the main processing unit 300 does not cause the face detection unit 210 to execute the user registration processing.

Thus, when the system booting factor is HID input, since it can be assumed that the HPD user ID of a person who made HID input is not registered, the information processing apparatus 1 registers the HPD user ID, while when the system booting factor is not HID input, since it can be assumed that the system is booted due to the approach of the authorized user whose HPD user ID is already registered, the information processing apparatus 1 does not register the HPD user ID. Therefore, the information processing apparatus 1 can prevent HPD user IDs of the same person (the authorized user) from being duplicately registered, and hence the information processing apparatus 1 can properly register a face image of the authorized user used for face authentication.

As an example, when a difference between the timing when HID input is detected and the timing when the display of the display unit 110 is turned on due to the fact that the system is booted is within a predetermined time (for example, within 0.5 seconds), the main processing unit 300 determines that the system booting factor is HID input.

Thus, the information processing apparatus 1 can properly determine whether or not the system booting factor is HID input.

In other words, when booting the system, the main processing unit 300 determines the difference between the timing when HID input is detected and the timing when the display of the display unit 110 is turned on due to the fact that the system is booted is within the predetermined time (for example, within 0.5 seconds), and when the determination result is true, the main processing unit 300 causes the face detection unit 210 to execute user registration processing after booting the system, while when the determination result is false, the main processing unit 300 does not cause the face detection unit 210 to execute the user registration processing.

Thus, since the information processing apparatus 1 can properly determine whether or not the system booting factor is HID input and properly register an HPD user ID as the authorized user based on the detected face image after booting the system only when the booting factor is HID input, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

Further, when booting the system, the main processing unit 300 controls whether or not to execute user registration processing after booting the system depending on whether or not the booting factor is the fact that the area of the face image is detected by the face detection processing and the face authentication by the face authentication processing is successful.

Thus, since the information processing apparatus 1 controls whether or not to register the HPD user ID for the face authentication of the authorized user based on the detected face image after bootup depending on whether or not the system is booted due to the approach of the authorized user whose HPD user ID is already registered, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

For example, when the system is booted due to a factor other than the success of the face authentication by the face authentication processing mentioned above, the main processing unit 300 causes the face detection unit 210 to execute the user registration processing, while when the system is booted based on the fact that the authentication result of the face authentication processing is successful, the main processing unit 300 does not cause the face detection unit 210 to execute the user registration processing.

Thus, since the information processing apparatus 1 does not register the HPD user ID when the system is booted due to the approach of the authorized user whose HPD user ID is already registered, and registers the HPD user ID when the system is booted due to any other booting factor, HPD user IDs of the same person (the authorized user) can be prevented from being duplicately registered. Therefore, the information processing apparatus 1 can properly register a face image of the authorized user used for face authentication.

Further, after booting the system, the main processing unit 300 executes login authentication processing (an example of system authentication processing) to authenticate whether or not a person is the authorized user by system processing. Then, as the user registration processing mentioned above, the face detection unit 210 registers, as the HPD user ID (the example of the information on a face image of the authorized user), feature information (the example of the information) on a face image detected by the face detection processing within the predetermined period of time (for example, within five seconds) after the authentication by the login authentication processing is successful.

Thus, since the information processing apparatus 1 uses the face image detected when the authentication of the login authentication is successful as the face image of the authorized user for face authentication, the face of the authorized user can be authenticated properly.

For example, as the user registration processing mentioned above, the face detection unit 210 registers, as the HPD user ID, feature information based on a face image when the face orientation is forward (an example of a specific orientation) among face images detected by the face detection processing within the predetermined period of time (for example, within five seconds) after the authentication by the login authentication processing is successful.

Thus, since the information processing apparatus 1 uses a face image with the face orientation taken into consideration for face authentication when using the face image detected when the authentication in the login authentication is successful as the face image of the authorized user for face authentication, the face of the authorized user can be authenticated properly.

Further, when the HPD user ID is in the unregistered state, the main processing unit 300 causes the face detection unit 210 to execute the user registration processing mentioned above regardless of the system booting factor.

Thus, when the HPD user ID is not registered, the information processing apparatus 1 can register a face image of the authorized user used for face authentication due to the fact that the system is booted.

Further, a control method for the information processing apparatus 1 according to the present embodiment includes: a step of causing the face detection unit 210 (the example of the first processor) to perform face detection processing to detect an area of a face image (face area) with a face captured therein from a captured image (for example, an RGB image) captured by the imaging unit 120; a step of causing the face detection unit 210 to perform face authentication processing to authenticate the face based on feature information (the example of the information) on the detected face image and an HPD user ID (the example of the information on a face image of the authorized user); a step of causing the main processing unit 300 (the example of the second processor) to execute a program of a system to boot the system from a standby state based on the fact that the face area is detected by the face detection processing and face authentication by the face authentication processing is successful; and a step in which, when booting the system, the main processing unit 300 controls whether or not to cause the face detection unit 210 to execute user registration processing to register, as the HPD user ID, feature information on the face image detected by the face detection processing after booting the system depending on whether or not a booting factor is HID input (input to an HID).

Thus, in a configuration that can boot the system by performing face authentication of the authorized user, since the control method for the information processing apparatus 1 controls whether or not to register the HPD user ID for the face authentication of the authorized user based on the detected face image after booting the system depending on whether or not the system booting factor is HID input, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

Further, another control method for the information processing apparatus 1 according to the present embodiment includes: a step of causing the face detection unit 210 (the example of the first processor) to perform face detection processing to detect an area of a face image (a face area) with a face captured therein from a captured image (for example, an RGB image) captured by the imaging unit 120; a step of causing the face detection unit 210 to perform face authentication processing to authenticate the face based on feature information (the example of the information) on the detected face image and the HPD user ID (the example of the information on a face image of the authorized user); a step of causing the main processing unit 300 (the example of the second processor) to execute a program of a system to boot the system from a standby state based on the fact that the face area is detected by the face detection processing and face authentication by the face authentication processing is successful; a step in which, when booting the system, the main processing unit 300 determines whether or not a difference between the timing when HID input is detected and the timing when the display of the display unit 110 is turned on due to the fact that the system is booted is within a predetermined time (for example, within 0.5 seconds); and a step in which, when the determination result is true, the main processing unit 300 causes the face detection unit 210 to execute user registration processing to register, as the HPD user ID, feature information on the face image detected by the face detection processing after booting the system, wherein when the determination result is false, the main processing unit 300 does not cause the face detection unit 210 to execute the user registration processing.

Thus, since the control method for the information processing apparatus 1 can properly determine whether or not the system booting factor is HID input, and can properly register an HPD user ID as the authorized user based on the detected face image after booting the system only when the booting factor is HID input, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

Further, still another control method for the information processing apparatus 1 according to the present embodiment includes: a step of causing the face detection unit 210 (the example of the first processor) to perform face detection processing to detect an area of a face image (a face area) with a face captured therein from a captured image (for example, an RGB image) captured by the imaging unit 120; a step of causing the face detection unit 210 to perform face authentication processing to authenticate the face based on feature information (the example of the information) on the detected face image and the HPD user ID (the example of the information on a face image of the authorized user); a step of causing the main processing unit 300 (the example of the second processor) to execute a program of a system to boot the system from a standby state; and a step in which, when booting the system, the main processing unit 300 controls whether or not to cause the face detection unit 210 to execute user registration processing to register, as the HPD user ID, feature information on the face image detected by the face detection processing after booting the system depending on whether or not a booting factor is the fact that the area of the face image is detected by the face detection processing and the face authentication by the face authentication processing is successful.

Thus, since the control method for the information processing apparatus 1 controls whether or not to register the HPD user ID for face authentication of the authorized user based on the detected face image after bootup depending on whether or not the system is booted due to the approach of the authorized user whose HPD user ID is already registered, the HPD user ID can be prevented from being registered unnecessarily after booting the system. Therefore, since the information processing apparatus 1 can prevent face images of similar faces of the same person (the authorized user) from being registered in large numbers and the registration slots (memory capacity) from being filled up, the information processing apparatus 1 can properly register a face image of the authorized user used for face authentication.

While the embodiment of this invention has been described in detail above with reference to the accompanying drawings, the specific configurations are not limited to those in the embodiment described above, and design changes are also included without departing from the scope of this invention. For example, the respective components described in the above-described embodiment can be combined arbitrarily.

Note that the imaging unit 120 may also include either one of the IR camera and the RGB camera. For example, the configuration may be such that the IR camera is used in both the HPD processing and the login authentication processing, or that the RGB camera is used in both the HPD processing and the login authentication processing.

Further, the frame rate of the imaging unit 120 in each operating state and processing is just an example, and is not limited to the example of each frame rate described above.

Further, in the aforementioned embodiment, the configuration example in which the imaging unit 120 is built in the information processing apparatus 1 is described, but the present invention is not limited to this example. For example, the imaging unit 120 does not have to be built in the information processing apparatus 1, which may also be attachable to the information processing apparatus 1 (for example, onto any one of the side faces 10a, 10b, 10c, and the like) and communicably connected to the information processing apparatus 1 wirelessly or by wire as an external accessory of the information processing apparatus 1.

Further, the CPU 301 and the chipset 303 that construct part of the main processing unit 300 (the example of the second processor) may be configured as individual processors, or configured to be integrated as one processor.

Further, in the aforementioned embodiment, the example in which the face detection unit 210 (the example of the first processor) is provided separated from the chipset 303 is illustrated, but some or all of the functions of the face detection unit 210 may be provided in the chipset 303, or may be provided in a processor integrated with the chipset 303. Further, the face detection unit 210, the chipset 303, and the CPU 301 may be configured to be integrated as one processor. Further, some or all of the functions of the face detection unit 210 may be provided in the EC 200.

Further, a hibernation state, a power-off state, and the like may be included as the standby state described above. The hibernation state corresponds, for example, to S4 state defined in the ACPI specification. The power-off state corresponds, for example, to S5 state (shutdown state) defined in the ACPI specification. Note that the standby state, the sleep state, the hibernation state, the power-off state, and the like as the standby state are states lower in power consumption than the normal operating state (states of reducing power consumption).

Note that the information processing apparatus 1 described above has a computer system therein. Then, a program for implementing the function of each component included in the information processing apparatus 1 described above may be recorded on a computer-readable recording medium so that the program recorded on this recording medium is read into the computer system and executed to perform processing in each component included in the information processing apparatus 1 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a storage medium such as a flexible disk, a magneto-optical disk, a portable medium like a flash ROM or a CD-ROM, or a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the information processing apparatus 1, or delivery servers for delivering respective divided pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions of the information processing apparatus 1 in the embodiment described above may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

### Description of Symbols

| | | |
|---|---|---|
| | 1 | information processing apparatus |
| | 10 | first chassis |
| | 20 | second chassis |
| | 15 | hinge mechanism |
| | 110 | display unit |
| | 120 | imaging unit |
| | 140 | power button |
| | 150 | input device |
| | 151 | keyboard |
| | 153 | touch pad |
| | 160 | communication unit |
| | 170 | storage unit |
| | 200 | EC |
| | 210 | face detection unit |
| | 211 | face detection processing unit |
| | 212 | face authentication processing unit |
| | 213 | HPD user ID registration unit |
| | 214 | HPD processing unit |
| | 300 | main processing unit |
| | 301 | CPU |
| | 302 | GPU |
| | 303 | chipset |
| | 304 | system memory |
| | 310 | system processing unit |
| | 311 | operation control unit |
| | 312 | authentication processing unit |
| | 330 | HPD control processing unit |
| C | 331 | operation instruction unit |
| | 332 | HID input detection unit |
| | 333 | user registration control unit |
| | 400 | power supply unit |

## Claims

1. An information processing apparatus comprising:
a memory arranged to temporarily store a program of a system;
a first processor arranged to execute face detection processing to detect an area of a face image with a face captured therein from a captured image captured by an imaging unit, and face authentication processing to authenticate the face based on information on the detected face image and information on a face image of an authorized user; and
a second processor arranged to execute the program of the system to boot the system from a standby state based on a fact that the area of the face image is detected by the face detection processing and face authentication by the face authentication processing is successful,
wherein when booting the system, the second processor is arranged to control whether or not to cause the first processor to execute user registration processing to register information on the face image detected by the face detection processing after booting the system as information on the face image of the authorized user depending on whether or not a booting factor is input to an HID (Human Interface Device).

2. The information processing apparatus according to claim 1, wherein when the system is booted due to a factor that there is input to the HID, the second processor is arranged to cause the first processor to execute the user registration processing, while when the booting factor is not input to the HID, the second processor is arranged not to cause the first processor to execute the user registration processing.

3. The information processing apparatus according to claim 1 or 2, wherein the second processor is arranged to determine that the factor of booting the system is input to the HID when a difference between a timing when input to the HID is detected and a timing when display of a display unit is turned on due to a fact that the system is booted is within a predetermined time.

4. An information processing apparatus comprising:
a memory arranged to temporarily store a program of a system;
a first processor arranged to execute face detection processing to detect an area of a face image with a face captured therein from a captured image captured by an imaging unit, and face authentication processing to authenticate the face based on information on the detected face image and information on a face image of an authorized user; and
a second processor arranged to execute the program of the system to boot the system from a standby state based on a fact that the area of the face image is detected by the face detection processing and face authentication by the face authentication processing is successful,
wherein when booting the system, the second processor is arranged to determine whether or not a difference between a timing when input to an HID (Human Interface Device) is detected and a timing when display of a display unit is turned on due to a fact that the system is booted is within a predetermined time, and when the determination result is true, the second processor is arranged to cause the first processor to execute user registration processing to register information on the face image detected by the face detection processing after booting the system as information on the face image of the authorized user, while when the determination result is false, the second processor is arranged not to cause the first processor to execute the user registration processing.

5. An information processing apparatus comprising:
a memory arranged to temporarily store a program of a system;
a first processor arranged to execute face detection processing to detect an area of a face image with a face captured therein from a captured image captured by an imaging unit, and face authentication processing to authenticate the face based on information on the detected face image and information on a face image of an authorized user; and
a second processor arranged to execute the program of the system to boot the system from a standby state,
wherein when booting the system, the second processor is arranged to control whether or not to cause the first processor to execute user registration processing to register information on the face image detected by the face detection processing after booting the system as information on the face image of the authorized user depending on whether or not a booting factor is a fact that the area of the face image is detected by the face detection processing and face authentication by the face authentication processing is successful.

6. The information processing apparatus according to claim 5, wherein when the system is booted due to a factor other than the success of the face authentication by the face authentication processing, the second processor is arranged to cause the first processor to execute the user registration processing, while when the system is booted based on the success of the authentication result of the face authentication processing, the second processor is arranged not to cause the first processor to execute the user registration processing.

7. The information processing apparatus according to claim 1, 4, or 5, wherein
after booting the system, the second processor is arranged to execute system authentication processing to authenticate whether or not the face image is the face image of the authorized user by processing of the system, and
during the user registration processing, the first processor is arranged to register information on the face image detected by the face detection processing as information on the face image of the authorized user within a predetermined time after authentication by the system authentication processing is successful.

8. The information processing apparatus according to claim 7, wherein during the user registration processing, the first processor is arranged to register, as the information on the face image of the authorized user, information on a face image when a face orientation becomes a specific orientation among face images detected by the face detection processing within a predetermined period of time after authentication by the system authentication processing is successful.

9. The information processing apparatus according to claim 1, 4, or 5, wherein when the information on the face image of the authorized user is in an unregistered state, the second processor is arranged to cause the first processor to execute the user registration processing regardless of the factor of booting the system.

10. A control method for an information processing apparatus including a memory arranged to temporarily store a program of a system, a first processor, and a second processor, the control method comprising:
a step of causing the first processor to perform face detection processing to detect an area of a face image with a face captured therein from a captured image captured by an imaging unit;
a step of causing the first processor to perform face authentication processing to authenticate the face based on information on the detected face image and information on a face image of an authorized user;
a step of causing the second processor to execute the program of the system to boot the system from a standby state based on a fact that the area of the face image is detected by the face detection processing and face authentication by the face authentication processing is successful; and
a step in which when booting the system, the second processor controls whether or not to cause the first processor to execute user registration processing to register information on the face image detected by the face detection processing after booting the system as information on the face image of the authorized user depending on whether or not a booting factor is input to an HID (Human Interface Device).

11. A control method for an information processing apparatus including a memory arranged to temporarily store a program of a system, a first processor, and a second processor, the control method comprising:
a step of causing the first processor to perform face detection processing to detect an area of a face image with a face captured therein from a captured image captured by an imaging unit;
a step of causing the first processor to perform face authentication processing to authenticate the face based on information on the detected face image and information on a face image of an authorized user;
a step of causing the second processor to execute the program of the system to boot the system from a standby state based on a fact that the area of the face image is detected by the face detection processing and face authentication by the face authentication processing is successful;
a step in which, when booting the system, the second processor determines whether or not a difference between a timing when input to an HID (Human Interface Device) is detected and a timing when display of a display unit is turned on due to a fact that the system is booted is within a predetermined time; and
a step in which, when the determination result is true, the second processor causes the first processor to execute user registration processing to register information on the face image detected by the face detection processing after booting the system as information on the face image of the authorized user,
wherein when the determination result is false, the second processor does not cause the first processor to execute the user registration processing.

12. A control method for an information processing apparatus including a memory arranged to temporarily store a program of a system, a first processor, and a second processor, the control method comprising:
a step of causing the first processor to perform face detection processing to detect an area of a face image with a face captured therein from a captured image captured by an imaging unit;
a step of causing the first processor to perform face authentication processing to authenticate the face based on information on the detected face image and information on a face image of an authorized user;
a step of causing the second processor to execute the program of the system to boot the system from a standby state; and
a step in which, when booting the system, the second processor controls whether or not to cause the first processor to execute user registration processing to register information on the face image detected by the face detection processing after booting the system as information on the face image of the authorized user depending on whether or not a booting factor is a fact that the area of the face image is detected by the face detection processing and face authentication by the face authentication processing is successful.

## Patentansprüche

1. Informationsverarbeitungsvorrichtung, Folgendes umfassend:
einen Speicher, der angeordnet ist, um ein Programm eines Systems vorübergehend zu speichern;
einen ersten Prozessor, der angeordnet ist, um eine Gesichtserkennungsverarbeitung zum Erkennen eines Bereichs eines Gesichtsbilds mit einem darin erfassten Gesicht aus einem erfassten Bild, das durch eine Bildgebungseinheit erfasst wurde, und eine Gesichtsauthentifizierungsverarbeitung zum Authentifizieren des Gesichts basierend auf Informationen über das erkannte Gesichtsbild und Informationen über ein Gesichtsbild eines autorisierten Benutzers auszuführen; und
einen zweiten Prozessor, der angeordnet ist, um das Programm des Systems zum Starten des Systems aus einem Bereitschaftszustand basierend auf einer Tatsache, dass der Bereich des Gesichtsbilds durch die Gesichtserkennungsverarbeitung erkannt wird und die Gesichtsauthentifizierung durch die Gesichtsauthentifizierungsverarbeitung erfolgreich ist, auszuführen,
wobei beim Starten des Systems der zweite Prozessor angeordnet ist zu steuern, ob der erste Prozessor veranlasst wird, eine Benutzerregistrierungsverarbeitung auszuführen, um Informationen über das durch die Gesichtserkennungsverarbeitung nach dem Starten des Systems erkannte Gesichtsbild als Informationen über das Gesichtsbild des autorisierten Benutzers zu registrieren, abhängig davon, ob ein Startfaktor in eine HID (Human Interface Device - humane Schnittstelleneinrichtung) eingegeben wird.

2. Informationsverarbeitungsvorrichtung nach Anspruch 1, wobei, wenn das System aufgrund eines Faktors, dass eine Eingabe in die HID vorgenommen wird, gestartet wird, der zweite Prozessor angeordnet ist, um den ersten Prozessor zu veranlassen, die Benutzerregistrierungsverarbeitung auszuführen, wenn dagegen der Startfaktor nicht in die HID eingegeben wird, der zweite Prozessor angeordnet ist, den ersten Prozessor nicht zu veranlassen, die Benutzerregistrierungsverarbeitung auszuführen.

3. Informationsverarbeitungsvorrichtung nach Anspruch 1 oder 2, wobei der zweite Prozessor angeordnet ist zu bestimmen, dass der Faktor des Startens des Systems in die HID eingegeben wird, wenn eine Differenz zwischen einem Zeitpunkt, zu dem eine Eingabe in die HID erkannt wird, und einem Zeitpunkt, zu dem die Anzeige einer Anzeigeeinheit aufgrund einer Tatsache, dass das System gestartet wird, eingeschaltet wird, innerhalb einer vorbestimmten Zeit liegt.

4. Informationsverarbeitungsvorrichtung, Folgendes umfassend:
einen Speicher, der angeordnet ist, um ein Programm eines Systems vorübergehend zu speichern;
einen ersten Prozessor, der angeordnet ist, um eine Gesichtserkennungsverarbeitung zum Erkennen eines Bereichs eines Gesichtsbilds mit einem darin erfassten Gesicht aus einem erfassten Bild, das durch eine Bildgebungseinheit erfasst wurde, und eine Gesichtsauthentifizierungsverarbeitung zum Authentifizieren des Gesichts basierend auf Informationen über das erkannte Gesichtsbild und Informationen über ein Gesichtsbild eines autorisierten Benutzers auszuführen; und
einen zweiten Prozessor, der angeordnet ist, um das Programm des Systems zum Starten des Systems aus einem Bereitschaftszustand basierend auf einer Tatsache, dass der Bereich des Gesichtsbilds durch die Gesichtserkennungsverarbeitung erkannt wird und die Gesichtsauthentifizierung durch die Gesichtsauthentifizierungsverarbeitung erfolgreich ist, auszuführen,
wobei beim Starten des Systems der zweite Prozessor angeordnet ist zu bestimmen, ob eine Differenz zwischen einem Zeitpunkt, zu dem eine Eingabe in eine HID (Human Interface Device) erkannt wird, und einem Zeitpunkt, zu dem die Anzeige einer Anzeigeeinheit aufgrund einer Tatsache, dass das System gestartet wird, eingeschaltet wird, innerhalb einer vorbestimmten Zeit liegt, und wenn das Bestimmungsergebnis wahr ist, der zweite Prozessor angeordnet ist, um den ersten Prozessor zu veranlassen, eine Benutzerregistrierungsverarbeitung auszuführen, um Informationen über das durch die Gesichtserkennungsverarbeitung nach dem Starten des Systems erkannte Gesichtsbild als Informationen über das Gesichtsbild des autorisierten Benutzers zu registrieren, wenn dagegen das Bestimmungsergebnis falsch ist, der zweite Prozessor angeordnet ist, um den ersten Prozessor nicht zu veranlassen, die Benutzerregistrierungsverarbeitung auszuführen.

5. Informationsverarbeitungsvorrichtung, Folgendes umfassend:
einen Speicher, der angeordnet ist, um ein Programm eines Systems vorübergehend zu speichern;
einen ersten Prozessor, der angeordnet ist, um eine Gesichtserkennungsverarbeitung zum Erkennen eines Bereichs eines Gesichtsbilds mit einem darin erfassten Gesicht aus einem erfassten Bild, das durch eine Bildgebungseinheit erfasst wurde, und eine Gesichtsauthentifizierungsverarbeitung zum Authentifizieren des Gesichts basierend auf Informationen über das erkannte Gesichtsbild und Informationen über ein Gesichtsbild eines autorisierten Benutzers auszuführen; und
einen zweiten Prozessor, der angeordnet ist, um das Programm des Systems auszuführen, um das System aus einem Bereitschaftszustand zu starten,
wobei beim Starten des Systems der zweite Prozessor angeordnet ist zu steuern, ob der erste Prozessor veranlasst wird, eine Benutzerregistrierungsverarbeitung auszuführen, um Informationen über das durch die Gesichtserkennungsverarbeitung erkannte Gesichtsbild nach dem Starten des Systems als Informationen über das Gesichtsbild des autorisierten Benutzers zu registrieren, abhängig davon, ob ein Startfaktor eine Tatsache ist, dass der Bereich des Gesichtsbilds durch die Gesichtserkennungsverarbeitung erkannt wird und die Gesichtsauthentifizierung durch die Gesichtsauthentifizierungsverarbeitung erfolgreich ist.

6. Informationsverarbeitungsvorrichtung nach Anspruch 5, wobei, wenn das System aufgrund eines anderen Faktors als des Erfolgs der Gesichtsauthentifizierung durch die Gesichtsauthentifizierungsverarbeitung gestartet wird, der zweite Prozessor angeordnet ist, um den ersten Prozessor zu veranlassen, die Benutzerregistrierungsverarbeitung auszuführen, wenn dagegen das System basierend auf dem Erfolg des Authentifizierungsergebnisses der Gesichtsauthentifizierungsverarbeitung gestartet wird, der zweite Prozessor angeordnet ist, den ersten Prozessor nicht zu veranlassen, die Benutzerregistrierungsverarbeitung auszuführen.

7. Informationsverarbeitungsvorrichtung nach Anspruch 1, 4 oder 5, wobei
nach dem Starten des Systems der zweite Prozessor angeordnet ist, um eine Systemauthentifizierungsverarbeitung auszuführen, um durch Verarbeitung des Systems zu authentifizieren, ob das Gesichtsbild das Gesichtsbild des autorisierten Benutzers ist, und
während der Benutzerregistrierungsverarbeitung der erste Prozessor angeordnet ist, um Informationen über das durch die Gesichtserkennungsverarbeitung erkannte Gesichtsbild als Informationen über das Gesichtsbild des autorisierten Benutzers innerhalb einer vorbestimmten Zeit nach erfolgreicher Authentifizierung durch die Systemauthentifizierungsverarbeitung zu registrieren.

8. Informationsverarbeitungsvorrichtung nach Anspruch 7, wobei während der Benutzerregistrierungsverarbeitung der erste Prozessor angeordnet ist, um als die Informationen über das Gesichtsbild des autorisierten Benutzers Informationen über ein Gesichtsbild zu registrieren, wenn eine Gesichtsausrichtung zu einer spezifischen Ausrichtung unter Gesichtsbildern wird, die durch die Gesichtserkennungsverarbeitung innerhalb einer vorbestimmten Zeitspanne nach erfolgreicher Authentifizierung durch die Systemauthentifizierungsverarbeitung erkannt werden.

9. Informationsverarbeitungsvorrichtung nach Anspruch 1, 4 oder 5, wobei, wenn sich die Informationen auf dem Gesichtsbild des autorisierten Benutzers in einem nicht registrierten Zustand befinden, der zweite Prozessor angeordnet ist, um den ersten Prozessor zu veranlassen, die Benutzerregistrierungsverarbeitung unabhängig von dem Faktor des Startens des Systems auszuführen.

10. Steuerungsverfahren für eine Informationsverarbeitungsvorrichtung, beinhaltend einen Speicher, der zum vorübergehenden Speichern eines Programms eines Systems angeordnet ist, einen ersten Prozessor und einen zweiten Prozessor, wobei das Steuerungsverfahren Folgendes umfasst:
einen Schritt des Veranlassens des ersten Prozessors, eine Gesichtserkennungsverarbeitung durchzuführen, um einen Bereich eines Gesichtsbilds mit einem darin erfassten Gesicht aus einem erfassten Bild, das durch eine Bildgebungseinheit erfasst wurde, zu erkennen;
einen Schritt des Veranlassens des ersten Prozessors, eine Gesichtsauthentifizierungsverarbeitung durchzuführen, um das Gesicht basierend auf Informationen über das erkannte Gesichtsbild und Informationen über ein Gesichtsbild eines autorisierten Benutzers zu authentifizieren;
einen Schritt des Veranlassens des zweiten Prozessors, das Programm des Systems zum Starten des Systems aus einem Bereitschaftszustand basierend auf einer Tatsache, dass der Bereich des Gesichtsbilds durch die Gesichtserkennungsverarbeitung erkannt wird und die Gesichtsauthentifizierung durch die Gesichtsauthentifizierungsverarbeitung erfolgreich ist, auszuführen; und
einen Schritt, in dem beim Starten des Systems der zweite Prozessor steuert, ob der erste Prozessor veranlasst wird, eine Benutzerregistrierungsverarbeitung auszuführen, um Informationen über das durch die Gesichtserkennungsverarbeitung nach dem Starten des Systems erkannte Gesichtsbild als Informationen über das Gesichtsbild des autorisierten Benutzers zu registrieren, abhängig davon, ob ein Startfaktor in eine HID (Human Interface Device) eingegeben wird.

11. Steuerungsverfahren für eine Informationsverarbeitungsvorrichtung, beinhaltend einen Speicher, der zum vorübergehenden Speichern eines Programms eines Systems angeordnet ist, einen ersten Prozessor und einen zweiten Prozessor, wobei das Steuerungsverfahren Folgendes umfasst:
einen Schritt des Veranlassens des ersten Prozessors, eine Gesichtserkennungsverarbeitung durchzuführen, um einen Bereich eines Gesichtsbilds mit einem darin erfassten Gesicht aus einem erfassten Bild, das durch eine Bildgebungseinheit erfasst wurde, zu erkennen;
einen Schritt des Veranlassens des ersten Prozessors, eine Gesichtsauthentifizierungsverarbeitung durchzuführen, um das Gesicht basierend auf Informationen über das erkannte Gesichtsbild und Informationen über ein Gesichtsbild eines autorisierten Benutzers zu authentifizieren;
einen Schritt des Veranlassens des zweiten Prozessors, das Programm des Systems zum Starten des Systems aus einem Bereitschaftszustand basierend auf einer Tatsache, dass der Bereich des Gesichtsbilds durch die Gesichtserkennungsverarbeitung erkannt wird und die Gesichtsauthentifizierung durch die Gesichtsauthentifizierungsverarbeitung erfolgreich ist, auszuführen;
einen Schritt, in dem beim Starten des Systems der zweite Prozessor bestimmt, ob eine Differenz zwischen einem Zeitpunkt, zu dem eine Eingabe in eine HID (Human Interface Device) erkannt wird, und einem Zeitpunkt, zu dem die Anzeige einer Anzeigeeinheit aufgrund einer Tatsache, dass das System gestartet wird, eingeschaltet wird, innerhalb einer vorbestimmten Zeit liegt; und
einen Schritt, in dem, wenn das Bestimmungsergebnis wahr ist, der zweite Prozessor den ersten Prozessor veranlasst, eine Benutzerregistrierungsverarbeitung auszuführen, um Informationen über das durch die Gesichtserkennungsverarbeitung nach dem Starten des Systems erkannte Gesichtsbild als Informationen über das Gesichtsbild des autorisierten Benutzers zu registrieren,
wobei, wenn das Bestimmungsergebnis falsch ist, der zweite Prozessor den ersten Prozessor nicht veranlasst, die Benutzerregistrierungsverarbeitung auszuführen.

12. Steuerungsverfahren für eine Informationsverarbeitungsvorrichtung, beinhaltend einen Speicher, der zum vorübergehenden Speichern eines Programms eines Systems angeordnet ist, einen ersten Prozessor und einen zweiten Prozessor, wobei das Steuerungsverfahren Folgendes umfasst:
einen Schritt des Veranlassens des ersten Prozessors, eine Gesichtserkennungsverarbeitung durchzuführen, um einen Bereich eines Gesichtsbilds mit einem darin erfassten Gesicht aus einem erfassten Bild, das durch eine Bildgebungseinheit erfasst wurde, zu erkennen;
einen Schritt des Veranlassens des ersten Prozessors, eine Gesichtsauthentifizierungsverarbeitung durchzuführen, um das Gesicht basierend auf Informationen über das erkannte Gesichtsbild und Informationen über ein Gesichtsbild eines autorisierten Benutzers zu authentifizieren;
einen Schritt des Veranlassens des zweiten Prozessors, das Programm des Systems auszuführen, um das System aus einem Bereitschaftszustand zu starten; und
einen Schritt, in dem beim Starten des Systems der zweite Prozessor steuert, ob der erste Prozessor veranlasst wird, eine Benutzerregistrierungsverarbeitung auszuführen, um Informationen über das durch die Gesichtserkennungsverarbeitung erkannte Gesichtsbild nach dem Starten des Systems als Informationen über das Gesichtsbild des autorisierten Benutzers zu registrieren, abhängig davon, ob ein Startfaktor eine Tatsache ist, dass der Bereich des Gesichtsbilds durch die Gesichtserkennungsverarbeitung erkannt wird und die Gesichtsauthentifizierung durch die Gesichtsauthentifizierungsverarbeitung erfolgreich ist.

## Revendications

1. Appareil de traitement d'informations comprenant :
une mémoire conçue pour stocker temporairement un programme d'un système ;
un premier processeur conçu pour exécuter un traitement de détection de visage afin de détecter une zone d'une image faciale comportant un visage capturé à partir d'une image capturée par une unité d'imagerie, et un traitement d'authentification faciale afin d'authentifier le visage sur la base d'informations relatives à l'image faciale détectée et d'informations relatives à une image faciale d'un utilisateur autorisé ; et
un second processeur conçu pour exécuter le programme du système afin de démarrer le système à partir d'un état de veille, sur la base de la détection de la zone de l'image faciale par le traitement de détection de visage et de la réussite de l'authentification faciale par le traitement d'authentification faciale,
dans lequel lors du démarrage du système, le second processeur est conçu pour commander ou non l'exécution par le premier processeur d'un traitement d'enregistrement utilisateur afin d'enregistrer les informations relatives à l'image faciale détectée par le traitement de détection de visage après le démarrage du système, en tant qu'informations relatives à l'image faciale de l'utilisateur autorisé, selon qu'un facteur de démarrage est entré ou non dans un HID (Dispositif d'interface humaine).

2. Appareil de traitement d'informations selon la revendication 1, dans lequel lorsque le système est démarré en raison de l'entrée d'un facteur dans le HID, le second processeur est conçu pour amener le premier processeur à exécuter le traitement d'enregistrement utilisateur, tandis que lorsque le facteur de démarrage n'est pas entré dans le HID, le second processeur est conçu pour ne pas amener le premier processeur à exécuter le traitement d'enregistrement utilisateur.

3. Appareil de traitement d'informations selon la revendication 1 ou 2, dans lequel le second processeur est conçu pour déterminer que le facteur de démarrage du système est entré dans le HID lorsqu'une différence entre un instant auquel l'entrée dans le HID est détectée et un instant auquel l'affichage d'une unité d'affichage est activé du fait du démarrage du système se situe dans un délai prédéterminé.

4. Appareil de traitement d'informations comprenant :
une mémoire conçue pour stocker temporairement un programme d'un système ;
un premier processeur conçu pour exécuter un traitement de détection de visage afin de détecter une zone d'une image faciale comportant un visage capturé à partir d'une image capturée par une unité d'imagerie, et un traitement d'authentification faciale afin d'authentifier le visage sur la base d'informations relatives à l'image faciale détectée et d'informations relatives à une image faciale d'un utilisateur autorisé ; et
un second processeur conçu pour exécuter le programme du système afin de démarrer le système à partir d'un état de veille, sur la base de la détection de la zone de l'image faciale par le traitement de détection de visage et de la réussite de l'authentification faciale par le traitement d'authentification faciale,
dans lequel lors du démarrage du système, le second processeur est conçu pour déterminer si oui ou non une différence entre l'instant auquel l'entrée dans un dispositif d'interface humaine (HID) est détectée et l'instant auquel l'affichage d'une unité d'affichage est activé du fait du démarrage du système se situe dans un délai prédéterminé, et lorsque le résultat de la détermination est positif, le second processeur est conçu pour amener le premier processeur à exécuter un traitement d'enregistrement utilisateur afin d'enregistrer des informations relatives à l'image faciale détectée par le traitement de détection de visage après le démarrage du système en tant qu'informations relatives à l'image faciale de l'utilisateur autorisé, tandis que lorsque le résultat de la détermination est négatif, le second processeur est conçu pour ne pas amener le premier processeur à exécuter le traitement d'enregistrement utilisateur.

5. Appareil de traitement d'informations comprenant :
une mémoire conçue pour stocker temporairement un programme d'un système ;
un premier processeur conçu pour exécuter un traitement de détection de visage afin de détecter une zone d'une image faciale comportant un visage capturé à partir d'une image capturée par une unité d'imagerie, et un traitement d'authentification faciale afin d'authentifier le visage sur la base d'informations relatives à l'image faciale détectée et d'informations relatives à une image faciale d'un utilisateur autorisé ; et
un second processeur conçu pour exécuter le programme du système afin de démarrer le système à partir d'un état de veille,
dans lequel lors du démarrage du système, le second processeur est conçu pour commander ou non l'exécution par le premier processeur d'un traitement d'enregistrement utilisateur afin d'enregistrer les informations relatives à l'image faciale détectée par le traitement de détection de visage après le démarrage du système, en tant qu'informations relatives à l'image faciale de l'utilisateur autorisé, selon qu'un facteur de démarrage correspond ou non à la détection de la zone de l'image faciale par le traitement de détection de visage et à la réussite de l'authentification faciale par le traitement d'authentification faciale.

6. Appareil de traitement d'informations selon la revendication 5, dans lequel lorsque le système est démarré en raison d'un facteur autre que la réussite de l'authentification faciale par le traitement d'authentification faciale, le second processeur est conçu pour amener le premier processeur à exécuter le traitement d'enregistrement utilisateur, tandis que, lorsque le système est démarré sur la base de la réussite du résultat d'authentification du traitement d'authentification faciale, le second processeur est conçu pour ne pas amener le premier processeur à exécuter le traitement d'enregistrement utilisateur.

7. Appareil de traitement d'informations selon la revendication 1, 4, ou 5, dans lequel
après le démarrage du système, le second processeur est conçu pour exécuter un traitement d'authentification de système afin d'authentifier si l'image faciale correspond ou non à l'image faciale de l'utilisateur autorisé par le traitement du système, et
au cours du traitement d'enregistrement utilisateur, le premier processeur est conçu pour enregistrer les informations relatives à l'image faciale détectée par le traitement de détection de visage, en tant qu'informations relatives à l'image faciale de l'utilisateur autorisé dans un délai prédéterminé après la réussite de l'authentification par le traitement d'authentification de système.

8. Appareil de traitement d'informations selon la revendication 7, dans lequel au cours du traitement d'enregistrement utilisateur, le premier processeur est conçu pour enregistrer, en tant qu'informations relatives à l'image faciale de l'utilisateur autorisé, les informations relatives à une image faciale lorsqu'une orientation de visage devient une orientation spécifique parmi des images faciales détectées par le traitement de détection de visage dans un délai prédéterminé après la réussite de l'authentification par le traitement d'authentification de système.

9. Appareil de traitement d'informations selon la revendication 1, 4, ou 5, dans lequel lorsque les informations relatives à l'image faciale de l'utilisateur autorisé sont dans un état non enregistré, le second processeur est conçu pour amener le premier processeur à exécuter le traitement d'enregistrement utilisateur, indépendamment du facteur de démarrage du système.

10. Procédé de commande pour un appareil de traitement d'informations comprenant une mémoire conçue pour stocker temporairement un programme d'un système, un premier processeur, et un second processeur, le procédé de commande comprenant :
une étape consistant à amener le premier processeur à exécuter un traitement de détection de visage afin de détecter une zone d'une image faciale comportant un visage capturé à partir d'une image capturée par une unité d'imagerie ;
une étape consistant à amener le premier processeur à exécuter un traitement d'authentification faciale afin d'authentifier le visage sur la base d'informations relatives à l'image faciale détectée et d'informations relatives à une image faciale d'un utilisateur autorisé ;
une étape consistant à amener le second processeur à exécuter le programme du système afin de démarrer le système à partir d'un état de veille, sur la base de la détection de la zone de l'image faciale par le traitement de détection de visage et de la réussite de l'authentification faciale par le traitement d'authentification faciale ; et
une étape dans laquelle, lors du démarrage du système, le second processeur commande ou non l'exécution par le premier processeur d'un traitement d'enregistrement utilisateur afin d'enregistrer les informations relatives à l'image faciale détectée par le traitement de détection de visage après le démarrage du système en tant qu'informations relatives à l'image faciale de l'utilisateur autorisé, selon qu'un facteur de démarrage est entré ou non dans un HID (Dispositif d'interface humaine).

11. Procédé de commande pour un appareil de traitement d'informations comprenant une mémoire conçue pour stocker temporairement un programme d'un système, un premier processeur, et un second processeur, le procédé de commande comprenant :
une étape consistant à amener le premier processeur à exécuter un traitement de détection de visage afin de détecter une zone d'une image faciale comportant un visage capturé à partir d'une image capturée par une unité d'imagerie ;
une étape consistant à amener le premier processeur à exécuter un traitement d'authentification faciale afin d'authentifier le visage sur la base d'informations relatives à l'image faciale détectée et d'informations relatives à une image faciale d'un utilisateur autorisé ;
une étape consistant à amener le second processeur à exécuter le programme du système afin de démarrer le système à partir d'un état de veille, sur la base de la détection de la zone de l'image faciale par le traitement de détection de visage et de la réussite de l'authentification faciale par le traitement d'authentification faciale ;
une étape dans laquelle, lors du démarrage du système, le second processeur détermine si une différence entre un instant auquel l'entrée dans un HID (Dispositif d'interface humaine) est détectée et un instant auquel l'affichage d'une unité d'affichage est activé du fait du démarrage du système se situe ou non dans un délai prédéterminé ; et
une étape dans laquelle, lorsque le résultat de détermination est positif, le second processeur amène le premier processeur à exécuter le traitement d'enregistrement utilisateur afin d'enregistrer les informations relatives à l'image faciale détectée par le traitement de détection de visage après le démarrage du système en tant qu'informations relatives à l'image faciale de l'utilisateur autorisé,
dans lequel lorsque le résultat de détermination est négatif, le second processeur n'amène pas le premier processeur à exécuter le traitement d'enregistrement utilisateur.

12. Procédé de commande pour un appareil de traitement d'informations comprenant une mémoire conçue pour stocker temporairement un programme d'un système, un premier processeur, et un second processeur, le procédé de commande comprenant :
une étape consistant à amener le premier processeur à exécuter un traitement de détection de visage afin de détecter une zone d'une image faciale comportant un visage capturé à partir d'une image capturée par une unité d'imagerie ;
une étape consistant à amener le premier processeur à exécuter un traitement d'authentification faciale afin d'authentifier le visage sur la base d'informations relatives à l'image faciale détectée et d'informations relatives à une image faciale d'un utilisateur autorisé ;
une étape consistant à amener le second processeur à exécuter le programme du système afin de démarrer le système à partir d'un état de veille ; et
une étape dans laquelle, lors du démarrage du système, le second processeur est conçu pour commander ou non l'exécution par le premier processeur d'un traitement d'enregistrement utilisateur afin d'enregistrer les informations relatives à l'image faciale détectée par le traitement de détection de visage après le démarrage du système en tant qu'informations relatives à l'image faciale de l'utilisateur autorisé, selon qu'un facteur de démarrage correspond ou non à la détection de la zone de l'image faciale par le traitement de détection de visage et à la réussite de l'authentification faciale par le traitement d'authentification faciale.
